(19) Europäisches Patentamt
European Patent Office
Office européen des brevets

(11) **EP 1 536 146 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(51) Int Cl.:
*F04D 29/68* (2006.01)   *F04D 27/02* (2006.01)

(21) Anmeldenummer: **04023822.2**

(22) Anmeldetag: **06.10.2004**

(54) **Strömungsarbeitsmaschine mit Fluidentnahme**

Turbo machine and fluid extraction

Turbomachine et prélèvement de fluide

(84) Benannte Vertragsstaaten:
**DE FR GB**

(30) Priorität: **26.11.2003 DE 10355240**

(43) Veröffentlichungstag der Anmeldung:
**01.06.2005 Patentblatt 2005/22**

(60) Teilanmeldung:
**10008711.3 / 2 249 043**
**10008712.1 / 2 249 044**
**10008713.9 / 2 249 045**

(73) Patentinhaber: **Rolls-Royce Deutschland Ltd & Co KG**
**15827 Dahlewitz (DE)**

(72) Erfinder: **Gümmer, Volker**
**15831 Mahlow (DE)**

(74) Vertreter: **Hoefer, Theodor**
**Patentanwälte**
**Gabriel-Max-Strasse 29**
**81545 München (DE)**

(56) Entgegenhaltungen:
**EP-A- 0 497 574     EP-A- 1 013 937**
**EP-A- 1 382 855     WO-A-98/30803**
**DE-C- 722 424       GB-A- 479 427**
**GB-A- 1 085 227     US-A- 2 720 356**
**US-A- 3 414 188     US-A- 3 735 593**
**US-A- 3 846 038     US-A- 5 762 470**

• **SCHULER B J ET AL: "Design, Analysis, Fabrication and Test of an Aspirated Fan Stage"** INTERNATIONAL GAS TURBINE AND AEROENGINE CONGRESS AND EXPOSITION, XX, XX, Nr. 2000-ST-618, 2000, Seiten 1-6, XP008088264

EP 1 536 146 B1

**Beschreibung**

Die vorliegende Erfindung bezieht sich auf Strömungsarbeitsmaschinen, wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es muss ein Gehäuse existieren, welches die Durchströmung des Rotors und Stators mit einem Fluid nach außen begrenzt.

Die aerodynamische Belastbarkeit und der Wirkungsgrad von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt.

Der Stand der Technik schlägt gegen dieses fundamentale Problem vor, die Grenzschicht des Fluids zu entfernen. Abgesehen von dieser sehr allgemeinen Vorgabe sind die vorbekannten Lösungen trivial und nur bedingt effektiv.

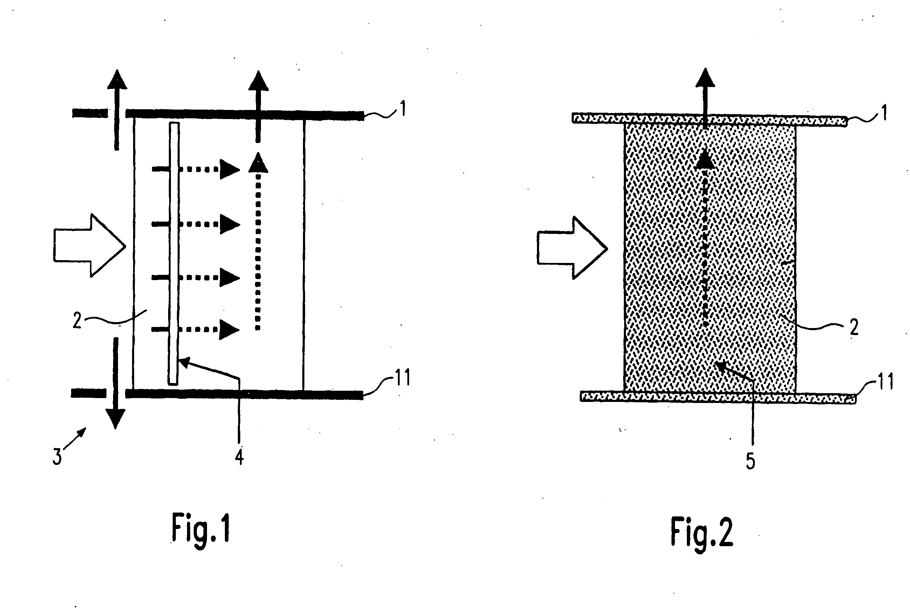

Die Fig. 1 und 2 zeigen in schematischer Darstellung die aus dem Stand der Technik bekannten Lösungen. Dabei zeigt die Fig. 1 in schematischer Darstellung ein Gehäuse 1 und eine Nabe 11, zwischen welchen ein Fluid, wie durch den großen Pfeil dargestellt, von links anströmt. Das Bezugszeichen 2 zeigt in schematischer Darstellung eine Schaufel, deren sichtbarer Bereich die "Saugseite" bildet. Wie durch die nach oben gerichteten Pfeile der Fig. 1 gezeigt, erfolgt eine lokale Luftentnahme auf der Schaufelsaugseite und im Axialspalt in achsensymmetrischer Anordnung. Der nach unten gerichtete, linke Pfeil zeigt eine Luftentnahme, die bei einem Rotor oder Stator durch einen Umfangsschlitz 3 vor der Schaufel erfolgt. Das Bezugszeichen 4 zeigt eine Lösung, bei welcher bei einem Stator über einen Schlitz und bei einem Rotor über eine Perforation, einen Schlitz, Löcher oder einen Staueinlauf Luft entnommen wird.

Die Fig. 2 zeigt mit dem nach oben gerichteten Pfeil eine globale Luftentnahme durch poröse Schaufeloberflächen. Das Bezugszeichen 5 bezeichnet einen Stator mit einem feinporigen, schwitzfähigen Werkstoff.

Der Stand der Technik beschreibt somit unterschiedliche Methoden, die eine in Strömungsrichtung punktuell begrenzte Entnahme der Grenzschicht durch Schlitze oder Löcher auf der Schaufelsaugseite oder durch Schlitze an den Seitenwänden (Nabe, Gehäuse) vor der Schaufel vorsehen. Dabei ist, wie erwähnt, auch vorgeschlagen worden, bei Statoren die Luftabfuhr auf einer über die ganze Schaufeloberfläche verteilten, globale Grenzschichtabsaugung durch feinporiges Material vorzunehmen.

Diese beschriebenen Maßnahmen besitzen entweder keinerlei spezifische Ausrichtung auf strömungstechnisch besonders problematische Zonen innerhalb der Schaufelpassage oder orientieren sich an der einfachen Vorstellung von zweidimensionalen Profilumströmungen, ohne Berücksichtigung der komplizierten dreidimensionalen Strömungsvorgänge im Seitenwandbereich einer Schaufel (nahe an einer Nabe oder an einem Gehäuse).

Üblicherweise wird beim Stand der Technik die Grenzschicht zunächst ins Schaufelinnere geführt und dann aus der Schaufel und dem Ringkanal der Strömungsarbeitsmaschine entfernt.

Eine Lösung sieht die Absaugung auf der Schaufelsaugseite und ein direktes Wiedereinströmen an der Schaufelspitze derselben Schaufel vor.

Weiterhin existieren im Stand der Technik Entwürfe, die Umfangsschlitze vor oder hinter einer Schaufelreihe an einer Nabe oder einem Gehäuse vorsehen, um die dortige Seitenwandgrenzschicht abzusaugen. Diese Maßnahme richtet sich allein auf die Reduzierung der Grenzschichtdicke am Schaufeleintritt ohne spezifische Ausrichtung auf besonders problematische Seitenwandzonen innerhalb der Schaufelpassage.

Der oben beschriebene Stand der Technik ist schriftlich in nachfolgenden Veröffentlichungen dokumentiert.

Zur Absaugung auf der Schaufeloberfläche durch Löcher, Einzelschlitze oder poröse Zonen sind die folgenden US-Patente zu nennen:

US 2,870,957
US 2,720,356
US 3,694,102
US 3,993,414
US 5,904,470
US 5,480,284

Die Absaugung an der Nabe oder am Gehäuse durch Umfangsschlitze vor oder hinter der Schaufelreihe zeigen folgen Veröffentlichungen:

Schuler et al.: Design, Analysis, Fabrication and Test of an Aspirated Fan Stage, ASME Paper 2000-GT-618, und Merchant et al.: Aerodynamic Design and Analysis of a High Pressure Ratio Aspirated Compressor Stage, ASME Paper 2000-GT-619.

2000-GT-618 (Schuler et al., 2000) beschreibt einen Verdichter mit Absaugung

a.) auf den Rotor- und Statorsaugseiten durch Schlitze und interne Schaufelkammern, Abführung durch das Deckband (Rotor wie Stator) am Gehäuse,

b.) vor dem Rotor am Gehäuse durch einen umlaufenden Ringschlitz,

c.) vor dem Stator am Gehäuse durch einen umlaufenden Ringschlitz,

d.) auf dem Rotordeckband durch eine Anordnung von Löchern,

e.) auf dem Statordeckband, am Gehäuse und an der Nabe.

Die US 2 720 356 beschreibt einen Verdichter mit Absaugung

a.) durch eine vollständig perforierte Gehäusewand,

b.) durch die Vorderkante, die Saugseite und die Hinterkante einer hohlen Statorschaufel mit Wegführung durch einen Stutzen auf der Gehäuseseite,

c.) vor und hinter dem Stator an der Nabe.

Die US 3 735 593 beschreibt den Bläser eines Triebwerks mit Absaugung

a.) am Gehäuse innerhalb des beschaufelten Raumes eines Rotors mit Laufspalt an der Hinterkante,

b.) am Gehäuse vor und hinter einem Rotors mit Deckband,

c.) am Gehäuse innerhalb des beschaufelten Raumes eines Rotors durch das Deckband,

d.) durch die offene Schaufelspitze eines Rotors, hinein ins Innere der Schaufel,

e.) an der Nabe hinter dem Rotor,

f.) an/nahe der Hinterkante eines Rotors,

g.) an/nahe der Hinterkante eines Stators.

Die WO 98/30803 A beschreibt den gegenläufigen Bläser eines Triebwerks mit Absaugung

a.) auf der Rotorsaugseite mit Entnahme von Luft durch poröse Wände, Schlitze oder Staueinläufe,

b.) auf der Saugseite nahe der Rotorspitze eines Rotors mit Laufspalt,

c.) von den Schaufeloberflächen eines Rotors mit Deckband und Wegführung der Luft durch das Deckband (hierbei wird an der dem Hauptströmungspfad zu gewandten Seite des Deckbandes keine Luft abgesaugt).

Die EP 1 382 855 beschreibt eine Strömungsarbeitsmaschine mit gleichzeitiger Absaugung und Einblasung an den Schaufeloberflächen (Saug- oder Druckseite) einer Rotor- oder Statorschaufel mit Luftzufuhr bzw. Luftabfuhr durch Hohlräume in der Schaufel, die mit Kammern an der Nabe oder am Gehäuse verbunden sind (eine Luftentnahme an den Hauptgaspfadwänden an Nabe oder Gehäuse wird hier nicht offenbart).

Die EP 0 497 574 beschreibt den Bläser eines Triebwerks mit einem Casing Treatment am Gehäuse innerhalb des beschaufelten Raumes des Rotors, wobei der Rotor einen Laufspalt am Gehäuse aufweist und das Casing Treatment eine Luftentnahme durch einen Ringschlitz oder eine Reihe von Öffnungen im hinteren Abschnitt des Rotors mit einer Einblasung im vorderen Abschnitt des Rotors verbindet.

Des Weiteren zeigt die GB 1 085 227 verschiedene Varianten der Absaugung an einer Rotorschaufelreihe des Verdichters einer Gasturbine:

a.) durch eine perforierte Gehäusewand im beschaufelten Bereich eines Rotors mit Laufspalt,

b.) durch eine Lochreihe oder eine Schlitzreihe an der Schaufelsaugseite und Wegführung der Luft durch einen Kanal zur und durch die Nabe.

Des Weiteren zeigt die US 3 414 188 die Absaugung von Luft entlang der Profiltiefe der Saugseite in Kombination mit Absaugung an der Hinterkante an einem Rotor, wobei die Wegführung der Luft durch einen Kanal zur und durch die Nabe geschieht.

Weiterhin beschreibt die US 3 846 038 eine wenigstens einseitig befestigte Reihe von Schaufeln mit einem Absaugschlitz diagonal durch die Passage zwischen zwei benachbarten Schaufeln, wobei es sich entweder um eine Statorgehäuse- oder auch eine Rotornabenanordnung handeln kann.

Aus der DE 722 424 C ist ein Gleichdruckgebläse bekannt, bei welchem in dem Gehäuse, angrenzend an das Schaufelende, Öffnungen vorgesehen sind, um Fluid abzuleiten. Die Öffnungen weisen eine axiale Erstreckung auf, die im Wesentlichen gleich der axialen Schaufellänge ist und sind zudem in einer konzentrischen Reihe angeordnet.

Aus der US-A-5 762 470 ist es bekannt, in Strömungsrichtung vor der Schaufelvorderkante in einer Reihe schlitzartige Öffnungen im Gehäuse auszubilden.

Schließlich beschreibt die EP 1 013 937 A2 eine Fluidentnahme am Gehäuse eines Axialverdichters im Bereich des Laufspalts von Rotorschaufeln.

Als nachteilig erweist es sich beim Stand der Technik, dass die existierenden Lösungen keine hochwirksamen und insbesondere hinsichtlich des Wirkungsgrades der Strömungsarbeitsmaschine günstige Lösungen bilden. Vielmehr sind die existierenden Absaugekonzepte vergleichsweise primitiv und sehen entweder die alleinige Absaugung der Profilgrenzschichten auf der Schaufeloberfläche vor oder kombinieren dies mit einer Absaugung vor der Schaufelreihe durch achsensymmetrische Ringschlitze an Nabe oder Gehäuse.

Der Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtentfernung sowie einen hohen Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Die erfindungsgemäße Strömungsarbeitsmaschine kann eine oder mehrere Stufen mit jeweils einem Rotor und einem Stator umfassen, in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor muss ohne Deckband am äußeren Schaufelende ausgeführt sein. Der erfindungsgemäße Stator besteht aus einer Anzahl feststehender Schaufeln, die nabenseitig mit freiem Schaufelende ausgeführt sein müssen.

Die erfindungsgemäß vorgesehene Rotortrommel und die Beschaufelung sind von einem Gehäuse umgeben.

Die Strömungsarbeitsmaschine kann auch einen Stator vor dem ersten Rotor aufweisen, ein so genanntes Vorleitrad.

Mindestens ein Stator oder Vorleitrad kann abweichend von der unbeweglichen Fixierung auch drehbar gelagert sein, um den Anströmungswinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Die Strömungsarbeitsmaschine kann alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Entnahme von Fluid an mindestens einer Schaufel einer Schaufelreihe des Rotors und/oder des Stators an aerodynamisch kritischen Orten auf Schaufelspitzen- und Ringkanaloberflächen (SRO) umfasst. Die Erfindung betrifft lediglich die Fluidentnahme an SRO von Typ B in der speziellen Ausführung mit Schwingform.

Zusätzlich zu Fluidentnahmevorrichtungen an SRO weist die Strömungsarbeitsmaschine optional an mindestens einer Schaufel einer Statorreihe Mittel zur Fluidentnahme auf, die auf der Schaufelsaugseite in Meridianströmungsrichtung nicht punktuell, sondern über einen definierten Bereich verteilt angelegt sind, und deren Meridianerstreckung in meridianstromlinienorthogonaler Richtung zu wenigstens einer der Ringkanalwände (Nabe oder Gehäuse) hin abnimmt (saugseitige, intensitätsvariable Fluidentnahme SIFE).

Im Folgenden werden Beispiele von Fluidentnahmevorrichtungen mit Figuren beschrieben. Dabei zeigt:

Fig. 1       eine schematische Darstellung des Standes der Technik,

Fig. 2       eine abgewandelte Darstellung eines weiteren aus dem Stand der Technik bekannten Ausführungsbeispiels,

Fig. 3       eine schematische Darstellung eines Grundkonzepts,

Fig. 4       eine weitere Darstellung unterschiedlicher Varian- ten,

Fig. 5       verschiedene Varianten und Konfigurationen der erfindungsgemäßen Strömungsarbeitsmaschine,

Fig. 6       eine Darstellung zur Definition des Begriffs SRO,

Fig. 7       eine weitere Darstellung zur Definition von SRO,

Fig. 8 bis 10       unterschiedliche Ausgestaltungsformen von Kammern zur Abführung des Fluids vornehm- lich vom Gehäuse aus,

Fig. 11 bis 13       Ausgestaltungsvarianten analog Fig. 8 bis 10 mit Kammern zur Abführung des Fluids vornehmlich von der Nabe aus,

Fig. 14 bis 17       Ausführungsvarianten einer Fluidentnahmevorrichtung an Schaufelspitzen und Ringkanaloberflächen (SRO) des Typs A,

Fig. 18 bis 21       Ausführungsvarianten der Fluidentnahmevorrichtung an Schaufelspit- zen- und Ringkanaloberflächen (SRO) des Typs B,

Fig. 22 bis 24       Ausführungsvarianten einer Fluidentnahmevorrichtung an Schaufel- spitzen- und Ringkanaloberflächen des Typs C, und

Fig. 25 bis 27       Vorrichtungen zur saugsei- tigen, intensitätsvariablen Fluidentnahme (SIFE),

Fig. 28 bis 29       unterschiedliche Ausgestaltungsformen von Kammern zur gleichzeitigen Abführung und Zuführung von Fluid an derselben Schaufel- reihe (Bifunktionalität).

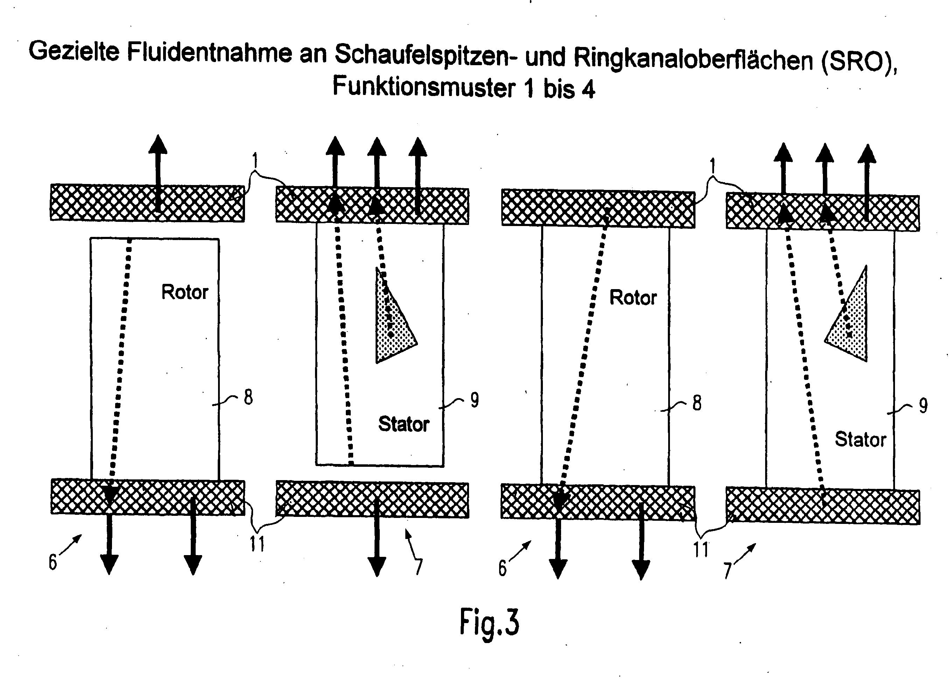

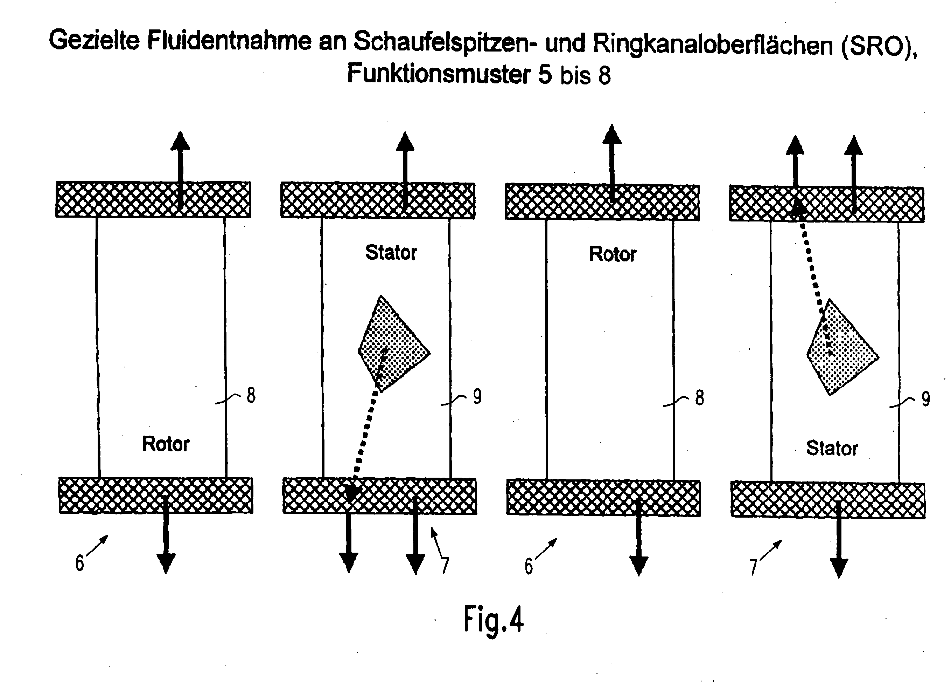

Die Fig. 3 zeigt in stark vereinfachter Darstellung vier unterschiedlich konfigurierte Schaufelreihen, welche jeweils einen Rotor 6 bzw. einen Stator 7 umfassen, die mit Rotorschaufeln 8 bzw. Statorschaufeln 9 versehen sind. Mit dem Bezugszeichen 1 wird in stark vereinfachter Darstellung ein Gehäuse oder ein außen liegendes Deckband wiedergegeben. Das Bezugszeichen 11 kennzeichnet eine Rotortrommel oder ein innen liegendes Deckband. Dargestellt ist die Saugseite der jeweiligen Schaufel. Auf Statoren ist eine Zone für saugseitige, intensitätsvariable Fluidentnahme (SIFE) vorgesehen.
In analoger Weise zeigt die Fig. 4 das Grundkonzept.

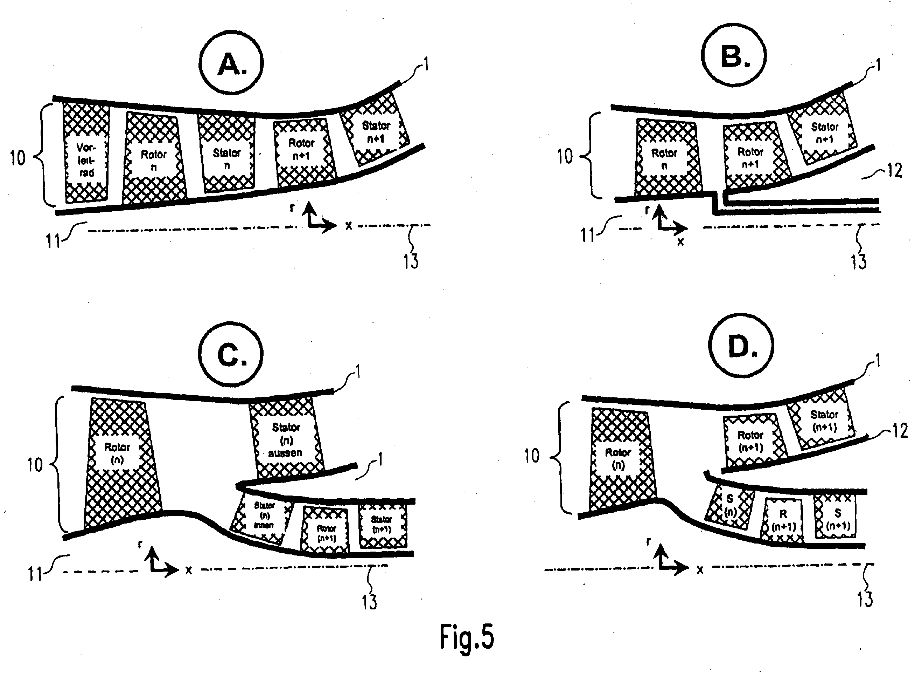

Die Fig. 5 zeigt vier verschiedene Konfigurationen der erfindungsgemäßen Strömungsarbeitsmaschine. Dabei bezeichnet das Bezugszeichen 10 einen von links nach rechts zu durchströmenden Ringkanal, mit dem Bezugszeichen 13 ist die Maschinenachse dargestellt, um welche sich eine Rotortrommel (Nabe) 11 dreht. Bei den in den Fig. 5B und 5D gezeigten Ausführungsbeispielen ist eine weitere Rotortrommel (Nabe) 12 vorgesehen. Die Rotoren, Statoren sowie das Vorleitrad sind jeweils in Fig. 5 beschriftet, es ist jeweils in schematischer Weise eine Schaufel dargestellt.

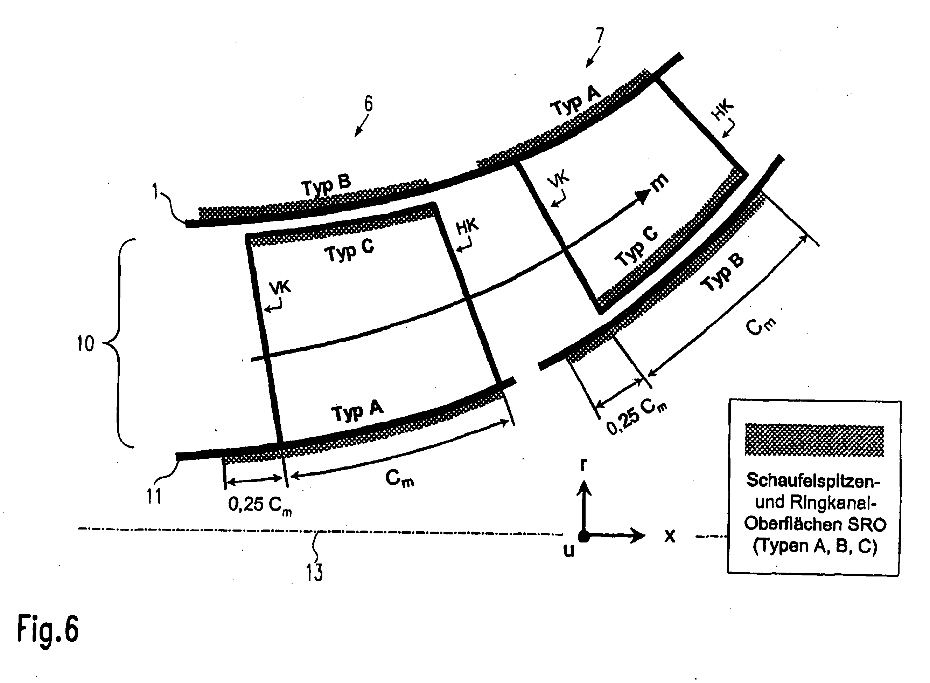

Die Fig. 6 zeigt die Definition der Schaufelspitzen- und Ringkanaloberflächen (SRO). Dabei sind insgesamt drei Typen dargestellt. Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.
Es ergeben sich somit folgende SRO-Typen:

SRO, Typ A: Die Oberflächen sind an der Naben- oder Gehäusekontur des Ringkanals mit fester Verbindung zur Schaufel ausgebildet, wie sie im Fall von Plattformen, Deckbändern, Blisk- und Blingkonfigurationen auftreten, und zwar zwischen der Hinterkantenebene HK und einer Ebene, die sich 25 % der meridionalen Schaufelsehnenlänge Cm vor der Vorderkantenebene VK befindet.

SRO, Typ B: Die Oberflächen sind an Naben- oder Gehäusekonturen des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 25 % der meridionalen Schaufelsehnenlänge Cm vor der Vorderkantenebene VK befindet, ausgebildet.

SRO, Typ C: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

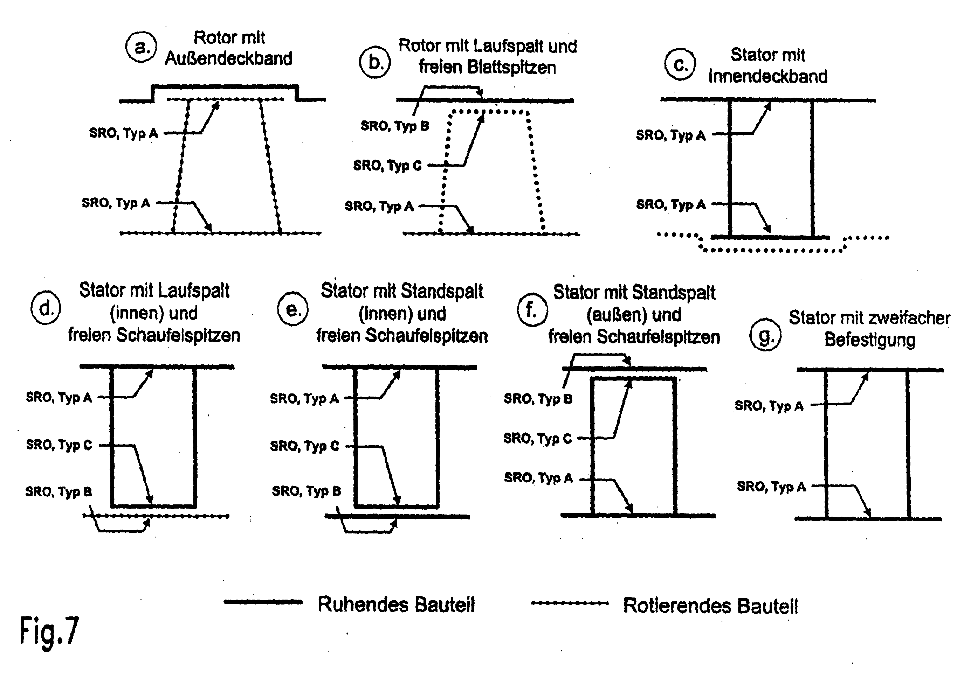

Die Fig. 7 zeigt unterschiedliche Ausführungen von Schaufelreihen der Strömungsarbeitsmaschine mit einer Kennzeichnung der wiederkehrenden Elemente SRO, Typ A, Typ B, Typ C. Im Einzelnen zeigen dabei die Ausführungsbeispiele Folgendes:

Die Fig. 7a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.

Die Fig. 7b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.

Die Fig. 7c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenen Deckband und einer innerhalb der ruhenden Bauteile rotierenden Rotortrommel.

Die Fig. 7d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.

Aus Fig. 7e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.

Die Fig. 7f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.

Die Fig. 7g verdeutlicht eine Baugruppe, welche aus einem ruhenden Innen- und Außengehäuse besteht, sowie mehreren mit dem Innen- und Außengehäuse verbundenen Statorschaufeln.

Die Führung des entnommenen Fluids erfolgt über Strömungswege an der Peripherie des Ringkanals oder innerhalb von Schaufeln und ihrer umgebenden Bauteile. Das Fluid wird dabei entweder bei freier Strömung oder aber mit Hilfe mindestens eines im Strömungsweg befindlichen Drosselorgans, das unverstellbar oder auch regelbar sein kann, aus dem Ringkanal im Bereich der betroffenen Schaufelreihe herausgeführt. Dieses Abführen des Fluids erfolgt mit dem Ziel, entweder das Fluid vollständig von der Strömungsarbeitsmaschine oder von der die Strömungsarbeitsmaschine einschließenden Gesamtanlage (Fördersystem, Gasturbine oder Triebwerk) zu entfernen, oder das Fluid dem Ringkanal der Strömungsarbeitsmaschine oder der Gesamtanlage wieder zuzuführen.

Die notwendigen Elemente des Strömungsweges können als einfacher Hohlraum, als Ringraum, als Rohrleitung, als Kanal, als Düse oder als Diffusor beliebiger Querschnittsform ausgestaltet sein und werden im Folgenden unter dem Begriff "Kammer" zusammengefasst.

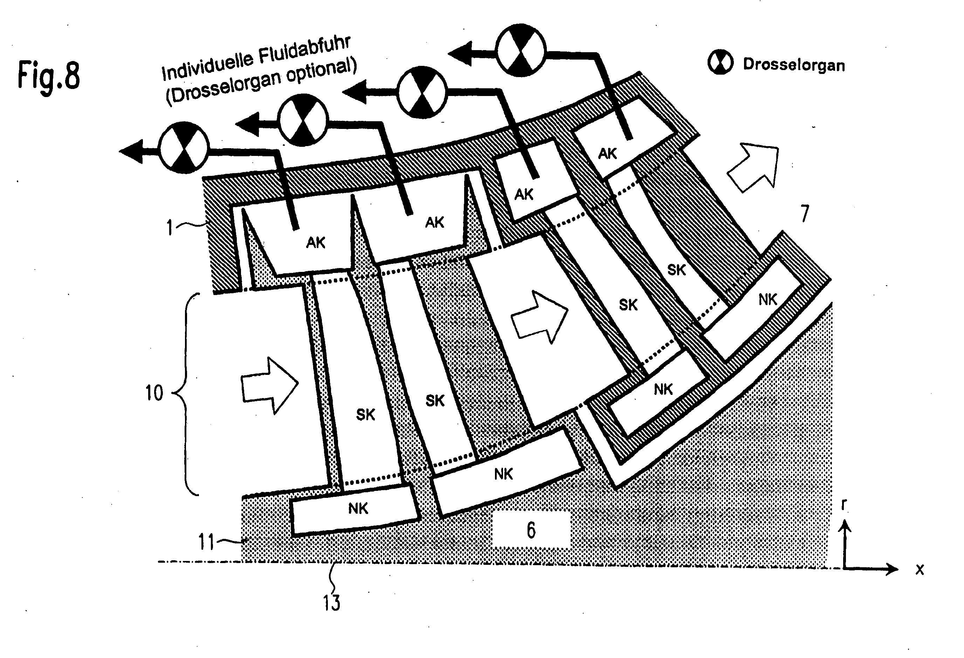

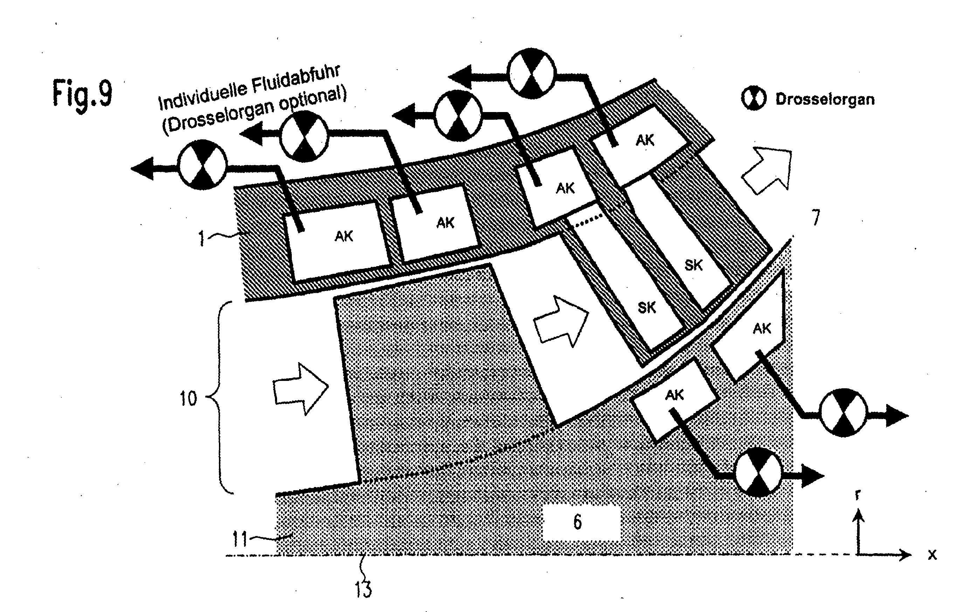

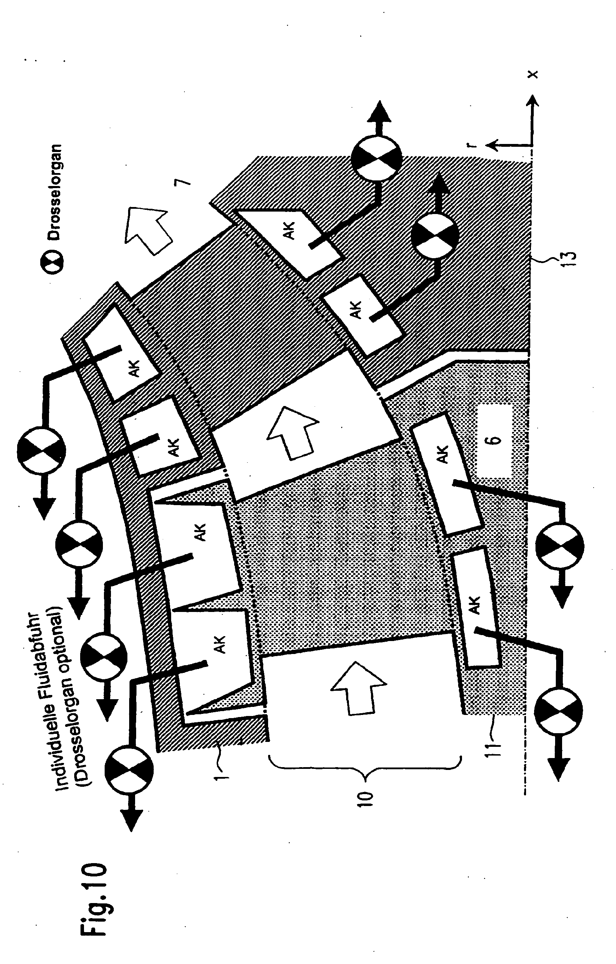

Die Fig. 8 bis 10 zeigen unterschiedliche Ausgestaltungsvarianten mit Konfigurationen, bei welchen Abfuhrkammern (AK), Schaufelinnenkammern (SK) und Nabenkammern (NK) vorgesehen sind.

Im Einzelnen zeigen die Fig. 8 bis 10 Ausgestaltungsvarianten, bei welchen den einzelnen Schaufelreihen jeweils mindestens eine Kammer am oder im Gehäuse zugeordnet ist, durch die Fluid von der Schaufelreihe entfernt wird (Abfuhrkammer AK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Abfuhrkammer AK mit mindestens einer Schaufelinnenkammer SK in Verbindung stehen und von dort Fluid entgegennehmen. Besitzt die Schaufel eine feste Anbindung zur inneren Ringkanalkontur, so kann als letztes Kammerglied des zur Fluidentfernung konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und dieser Fluid zuführt. Besitzt die Schaufel ein freies Ende mit Radialspalt an der Nabe oder weist die Schaufel keine über die gesamte Schaufelhöhe reichende Schaufelinnenkammer auf, kann zur Fluidentfernung an der Nabe ebenfalls mindestens eine Abfuhrkammer an oder in der Nabe außerhalb des Ringkanals existieren.

Abfuhrkammern und Nabenkammern erstrecken sich über die Gesamtheit oder nur Teile des Maschinenumfangs. Die Abfuhrkammern dienen der Wegleitung des Fluids von der betreffenden Schaufelreihe, wobei die Schaufelinnenkammern und die Nabenkammern Hilfsmittel sind, um den Zugang zu den relevanten Schaufelspitzen- und Ringkanaloberflächen (SRO) der betreffenden Schaufelreihe herzustellen.

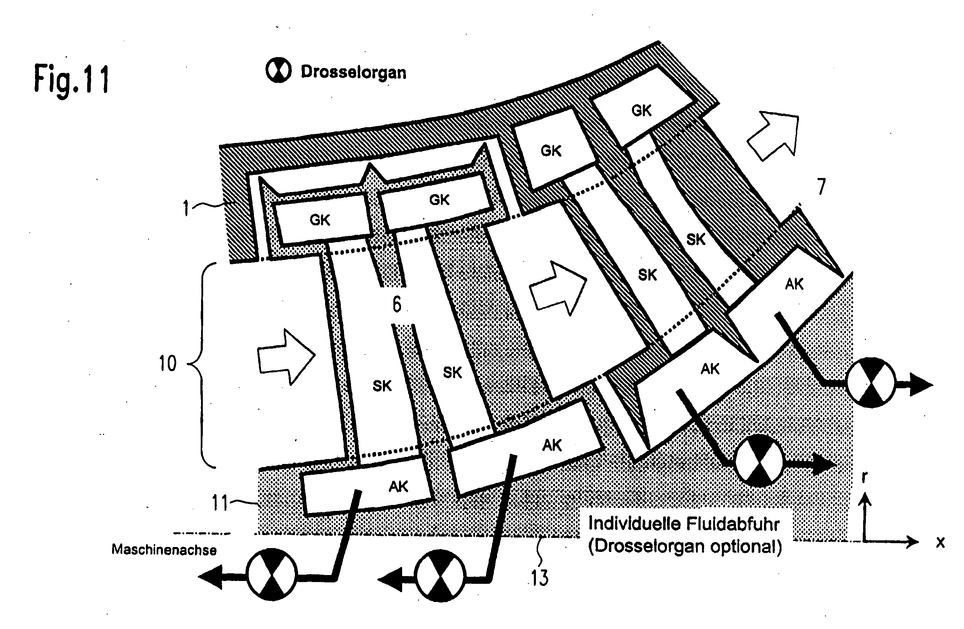

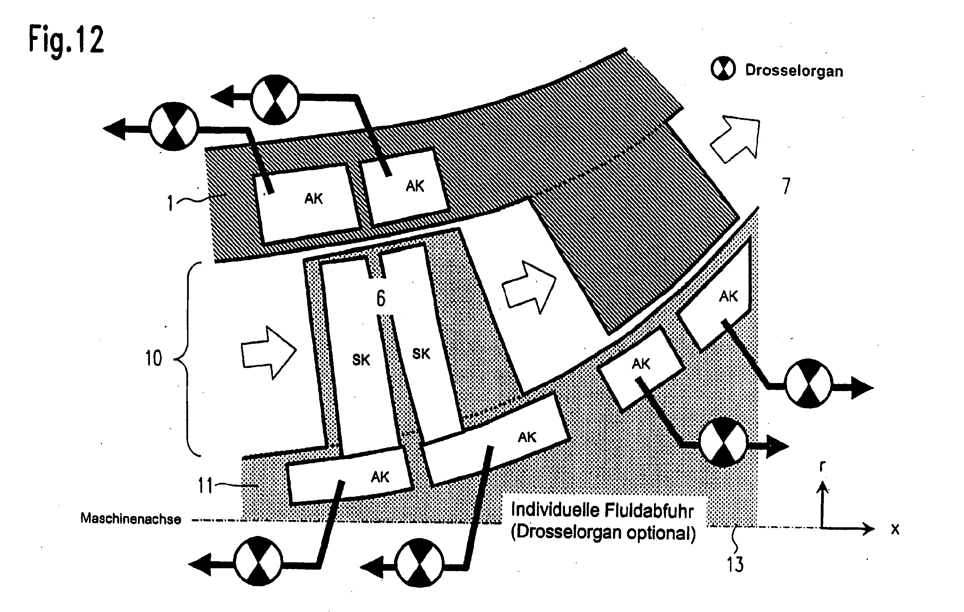

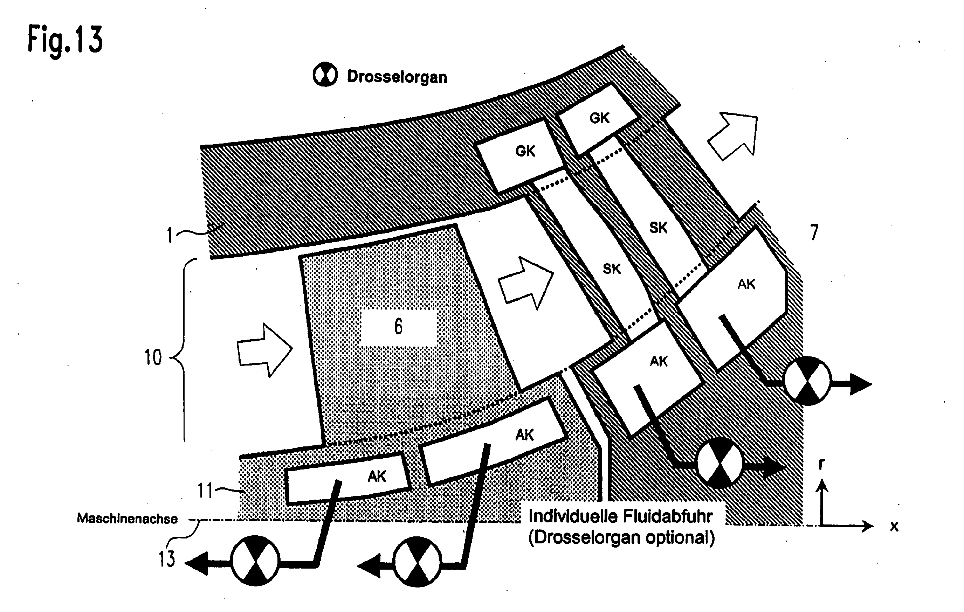

Während in den Fig. 8 bis 10 Ausgestaltungsformen gezeigt wurden, bei welchen mindestens eine Abfuhrkammer am oder im Gehäuse angeordnet ist, zeigen die Fig. 11 bis 13 Ausgestaltungsformen, bei welchen mindestens eine Kammer an oder in der Nabe angeordnet ist, durch die Fluid von der Schaufelreihe entfernt wird (Abfuhrkammer AK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Abfuhrkammer AK mit mindestens einer Schaufelinnenkammer SK in Verbindung stehen und von dort Fluid entgegennehmen. Besitzt die Schaufel eine feste Anbindung zur äußeren Ringkanalkontur, so kann als letztes Kammerglied des zur Fluidentfernung konzipierten Gesamtströmungsweges mindestens eine Kammer am oder im Gehäuse außerhalb des Ringkanals existieren (Gehäusekammer GK), die mit mindestens einer Schaufelinnenkammer SK in Verbindung steht und dieser Fluid zuführt.

Besitzt die Schaufel ein freies Ende mit Radialspalt am Gehäuse oder weist die Schaufel keine über die gesamte Schaufelhöhe reichende Schaufelinnenkammer SK auf, kann zur Fluidentfernung am Gehäuse ebenfalls mindestens eine Abfuhrkammer am oder im Gehäuse außerhalb des Ringkanals existieren.

Die Abfuhrkammern und die Gehäusekammern erstrecken sich über die Gesamtheit oder nur Teile des Umfangs der Strömungsarbeitsmaschine.

Die Abfuhrkammern dienen zur Wegleitung des Fluids von der betreffenden Schaufelreihe. Die Schaufelinnenkammern und die Gehäusekammern sind Hilfsmittel, um den Zugang zu relevanten Schaufelspitzen- und Ringkanaloberflächen (SRO) im Bereich der betreffenden Schaufelreihe herzustellen.

Es ist vorgesehen, dass bei einer Schaufelreihe der im Zusammenhang mit den Fig. 8 bis 10 bzw. 11 bis 13 beschriebenen Ausgestaltungsformen an mindestens einer Schaufelspitzen- und Ringkanaloberfläche (SRO) an mindestens einer ihrer Schaufeln und/oder mindestens einem ihrer den Ringkanal begrenzenden Bauteile mindestens eine Fluidentnahmevorrichtung vorgesehen ist, die eine Verbindung zwischen der Schaufelspitzen- und Ringkanaloberfläche (SRO) und einer Abfuhrkammer AK, einer Schaufelinnenkammer SK, einer Nebenkammer NK oder einer Gehäusekammer GK herstellt. Die konstruktive Ausführung der Fluidentnahmevorrichtung erfolgt durch mechanische, chemische oder thermische Materialabtragsverfahren an dem die Schaufelspitzen- und Ringkanaloberfläche (SRO) bildenden Bauteil.

In einer alternativen Ausgestaltung erhält die Fluidentnahmevorrichtung ihre Begrenzungen durch die Kombination mindestens zweier vorbereiteter Einzelbauteile, die lose oder fest zusammengefügt werden.

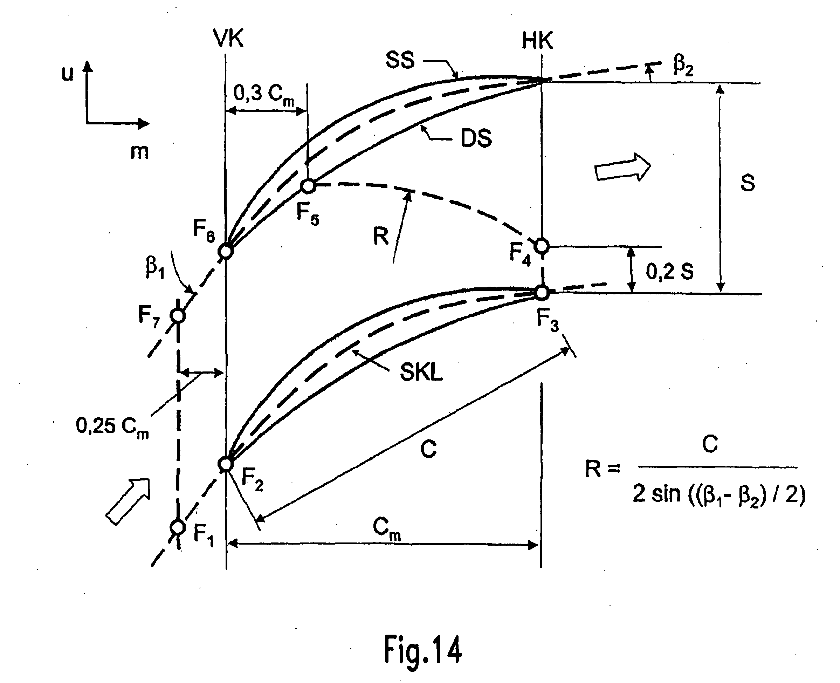

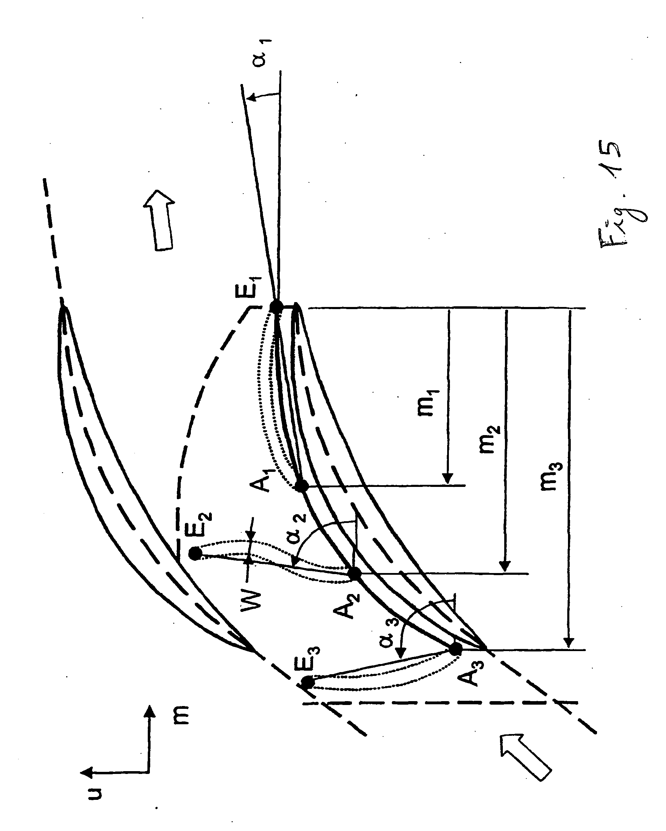

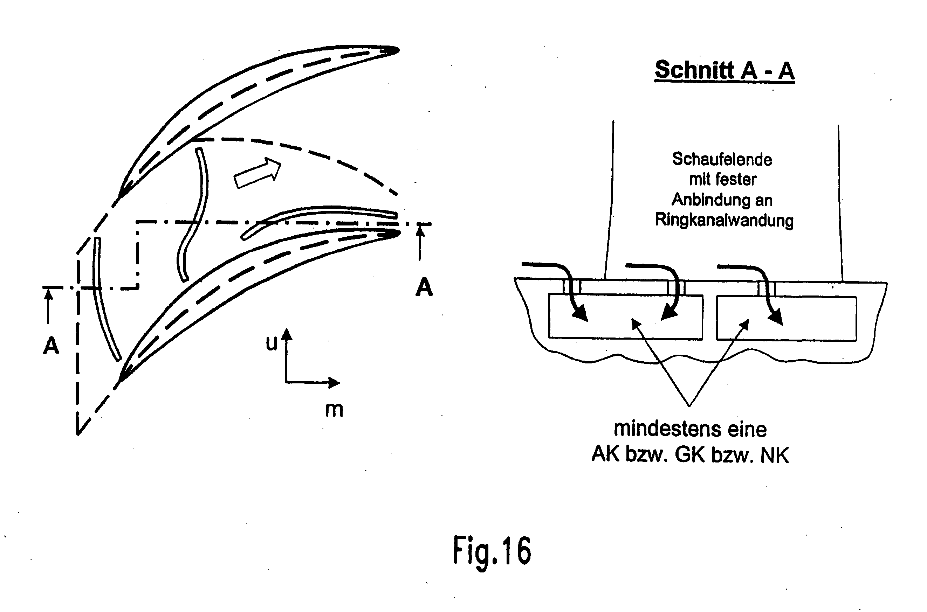

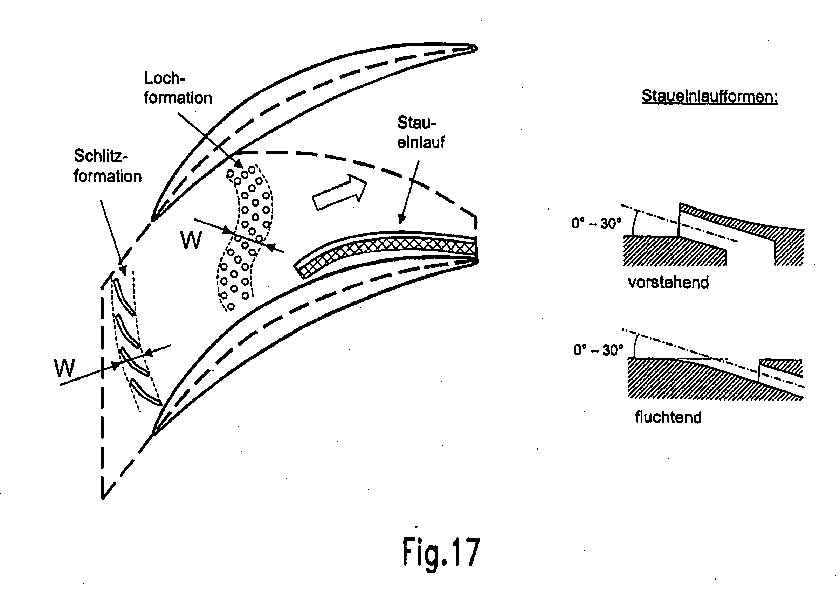

Die Fig. 14 bis 17 zeigen Beispiele für die Fluidentnahmevorrichtung an Schaufelspitzen- und Ringkanaloberflächen (SRO) des Typs A (Fig. 14), beispielhaft für den Fall N = 3 (Fig. 15) sowie beispielhaft für den Fall N = 3 (drei Schlitze oder Ersatzelemente), siehe Fig. 16 und 17.

Bei den somit in den Fig. 14 bis 17 gezeigten Ausführungsbeispielen der Fluidentnahmevorrichtung an Schaufelspitzen- und Ringkanaloberflächen (SRO) des Typs A sind Konfigurationen von Schlitzen bzw. funktional ähnlichen Ersatzelementen im vorderen Teil der Schaufelpassage gezeigt. Einzelne Schlitze (bzw. Ersatzelemente) können unterschiedlichen Abfuhr-, Gehäuse- oder Nabenkammern zugeordnet sein. Dabei ergibt sich Folgendes:

Betrachtet man die Ringkanaloberfläche in dem aus Meridianstromlinienrichtung und Umfangsrichtung gebildeten Koordinatensystem (m,u), so befindet sich eine Konfiguration von Schlitzen in einem Segment der Ringkanalwand, das durch den Kurvenzug F1-F2-F3-F4-F5-F6-F7-F1 umschlossen wird.

Die Strecke F1-F2 stellt, ebenso wie die Strecke F6-F7, eine tangentiale Verlängerung der Profilskelettlinie SKL gegen die Strömungsrichtung dar. Die Strecke F1-F7 liegt 25 % der meridionalen Profilsehnenlänge (0.25 *Cm) vor der Vorderkantenebene. Die Strecke F2-F3 ist durch die Saugseitenkontur SS zwischen Vorderkante VK und Hinterkante HK gegeben. Die Strecke F3-F4 verläuft in der Hinterkantenebene vom Profil bis zu einem Punkt bei 20 % der austrittseitigen Schaufelteilung (0,2 * S) in Richtung der Druckseite des benachbarten Profils. Die Strecke F4-F5 ist ein Kreisbogen, dessen Radius R sich aus der Profilsehnenlänge C und den Ein- und Austrittswinkeln beta1 und beta2 berechnet nach R = C / (2 * sin ((beta1 - beta2) / 2)). Die Strecke F5-F6 ist durch einen Teil der Druckseitenkontur DS zwischen der Vorderkante VK und einem um 30 % der meridionalen Profilsehnenlänge in der Schaufelpassage gelegenen Punkt gegeben.

Eine Anzahl von mindestens 2 Schlitzen (Anzahl N > 1) bildet eine besondere Anordnung, die sich etwa orthogonal zum Verlauf der zu erwartenden Grenzschichtströmung ausrichtet. Das Konzept geht aus von einem entlang der Saugseite SS orientierten Schlitz, der bis zur Hinterkantenebene reicht, aber mit steigender Anzahl weiterer vorgesehener Schlitze kürzer wird. Weitere Schlitze sind um so stärker gegen die Meridianströmungsrichtung m geneigt, je näher sie am Eintritt des Schaufelkanals liegen. Alle Schlitze sind definiert durch einen Anfangspunkt, einen Endpunkt und eine Winkelangabe für die von Anfangs- zu Endpunkt reichende Hilfsgerade. Die Anfangspunkte befinden sich auf einer Basislinie, die entweder durch die Saugseitenkontur selbst oder eine an der Saugseitenkontur orientierten Linie gegeben ist, die in Umfangsrichtung u aber an keiner Stelle weiter als 20 % der austrittseitigen Schaufelteilung (0,2 * S) von ihr entfernt liegt. Die Lage aller Anfangspunkte ist durch die Basislinie und einen meridionalen Abstand zur Hinterkantenebene festgelegt.

Der meridionale Hinterkantenabstand m(i) eines Anfangspunktes A(i) des Schlitzes mit der Nummer (i) beträgt m(i) = (i + 1) * Cm / (N + 1). Für m(i) gilt eine Toleranz von +/- 0,1 * Cm.

Der Neigungswinkel der Hilfsgeraden zwischen dem Anfangspunkt A(i) und dem Endpunkt E(i) eines Schlitzes mit der Nummer (i) beträgt alpha(i) = alpha1 + (i - 1) * (110° - alpha1) / (N - 1). Alpha1 ist hier durch die Tatsache festgelegt, dass sowohl Anfangs- als auch Endpunkt des Schlitzes mit der Nummer 1 auf der Basislinie liegen. Für alpha (i) gilt eine Toleranz von +/-20°.

Der Verlauf eines jeden Schlitzes ist gestützt durch die jeweilige Hilfsgerade, muss aber mit ihr lediglich in Anfangs- und Endpunkt genau übereinstimmen. Alle Schlitze enden in den Grenzen des durch den Kurvenzug F1-F2-F3-F4-F5-F6-F7-F1 umschlossenen Ringkanalwandsegmentes.

Sie verlaufen zwischen Anfangspunkt und Endpunkt geradlinig, einfach gekrümmt oder mehrfach gekrümmt. Sie besitzen eine konstante oder in ihrer Längsrichtung veränderliche Weite W, die aber stets kleiner als 10 % der austrittseitigen Schaufelteilung bleibt (W < 0,1 * S). Sie weisen eckige, angefaste oder gerundete Oberflächenkanten auf. Sie besitzen an Anfangs- und Endpunkt eine eckige Form oder einen runden (langlochähnlichen) Abschluss. Die Schlitze führen senkrecht oder schräg zur Ringkanaloberfläche durch das Wandmaterial in eine Abfuhrkammer AK, eine Nabenkammer NK oder eine Gehäusekammer GK.

In einer abgewandelten Form tritt - bei gleichen Regeln hinsichtlich der Positionierung und des Verlaufes an der Ringkanaloberfläche sowie der Beschaffenheit der Oberflächenkanten und Orientierung in der Ringkanalwand - an die Stelle mindestens eines Schlitzes eine Formation aus mehreren geraden oder gekrümmten Schlitzen mit einer maximalen Weite W der Schlitzkonfiguration von 15 % der austrittseitigen Schaufelteilung (W < 0,15 * S).

In einer anderen abgewandelten Form tritt - bei gleichen Regeln hinsichtlich der Positionierung und des Verlaufes an der Ringkanaloberfläche sowie der Beschaffenheit der Oberflächenkanten und Orientierung in der Ringkanalwand - an die Stelle mindestens eines Schlitzes eine ein- oder mehrreihige Formation von Löchern mit einer maximalen Weite W der Lochkonfiguration von 15 % der austrittseitigen Schaufelteilung (W < 0,15 * S).

In einer anderen abgewandelten Form ist - bei gleichen Regeln hinsichtlich der Positionierung und des Verlaufes an der Ringkanaloberfläche - mindestens ein Schlitz als Staueinlauf ausgeformt, **dadurch gekennzeichnet, dass** Fluid unter höchstens 30° zur Ringkanaloberfläche abgeführt wird.

In einer anderen abgewandelten Form entfällt - bei gleichen Regeln hinsichtlich der Positionierung und des Verlaufes an der Ringkanaloberfläche sowie der Beschaffenheit der Oberflächenkanten und Orientierung in der Ringkanalwand - mindestens eines der N Elemente (Schlitz, Schlitzformation, Lochformation oder Staueinlauf).

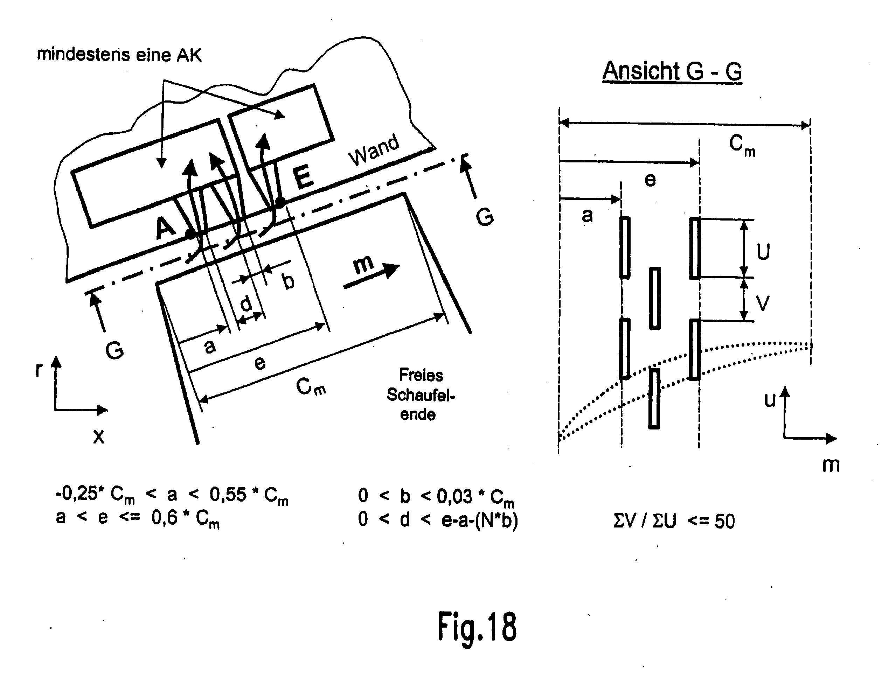

Die Fig. 18 bis 21 zeigen Ausführungsformen der Fluidentnahmevorrichtung an Schaufelspitzen- und Ringkanaloberflächen (SRO) des Typs B, bei welchen eine Konfiguration von Schlitzen bzw. funktional ähnlichen Ersatzelementen im vorderen Teil des freien Schaufelendes vorgesehen ist. Einzelne Schlitze (bzw. Ersatzelemente) der Konfiguration können unterschiedlichen Abfuhrkammern zugeordnet sein. Die beschriebene Ausgestaltung der Fluidentnahmevorrichtung ist dabei nicht zu verwechseln mit vielfach beschriebenen Ausführungen einer so genannten Gehäusestrukturierung oder eines Casing Treatments, da es hier nicht auf einen pulsierenden Austausch von Fluid zwischen Schlitzraum und Ringraum, sondern die lokale Entnahme von Fluid ankommt.

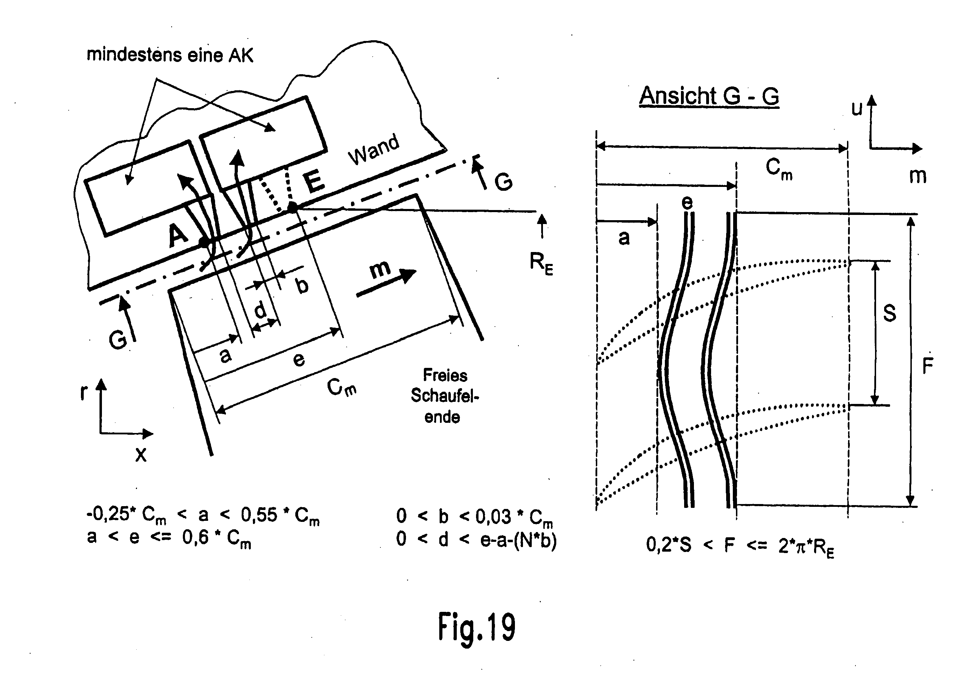

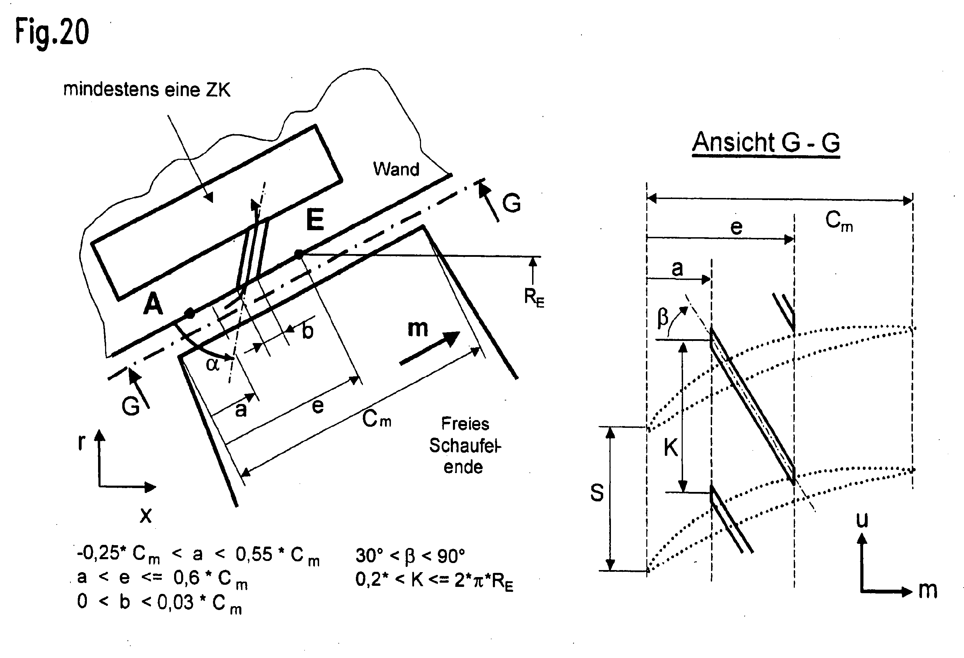

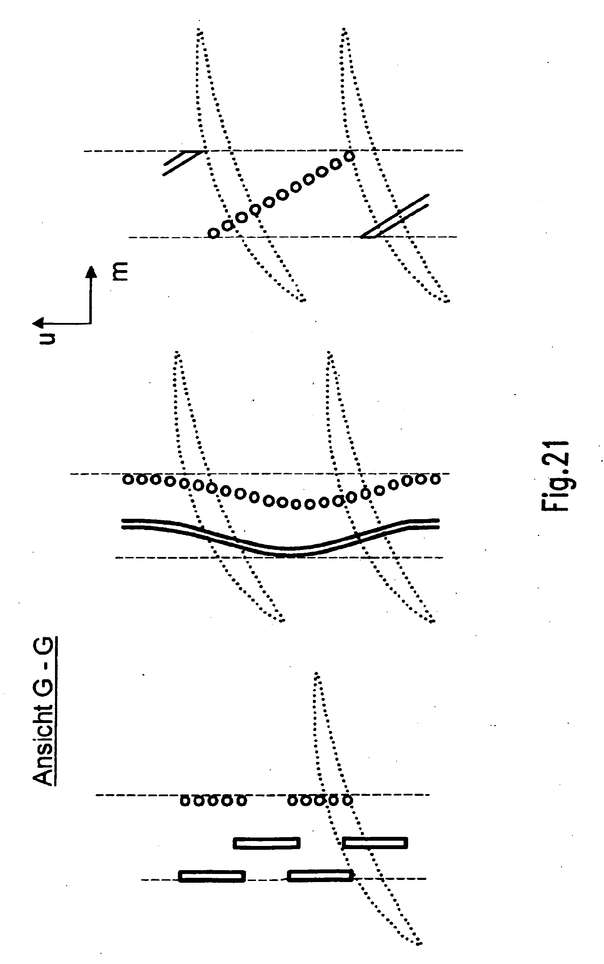

Die Fig. 18 zeigt eine Fluidentnahmevorrichtung an Schaufelspitzen- und Ringkanaloberflächen (SRO) des Typs B mit einer umfangsgerichteten Schlitzanordnung, beispielhaft für den Fall N = 3. In Fig. 19 ist eine erfindungsgemäße Fluidentnahmevorrichtung des Typs B beschrieben, welche eine Schwingform-Schlitzanordnung aufweist, beispielhaft für den Fall N = 2. Die Fig. 20 zeigt eine Fluidentnahmevorrichtung des Typs B mit einer gestaffelten Schlitzanordnung, während die Fig. 21 eine Ausgestaltungsvariante einer Fluidentnahmevorrichtung des Typs B zeigt, bei welcher ein Schlitz durch Lochreihen ersetzt ist.

Im Einzelnen zeigen die Fig. 18 bis 21 folgende Details:

Betrachtet man die Schaufelreihe in dem aus Axialrichtung und Radialrichtung gebildeten Koordinatensystem (x,r), so befindet sich erfindungsgemäß eine Konfiguration von N Schlitzen (N >= 1) in einem Abschnitt der Ringkanalwand, der in Meridianrichtung m durch den Anfangspunkt A und den Endpunkt E begrenzt wird. Der Anfangspunkt A befindet sich in einem meridionalen Abstand a von der am Schaufelende betrachteten Schaufelvorderkante. Der Abstand a kann maximal 25 % der meridionalen Sehnenlänge Cm vor die Vorderkante und maximal 55 % der meridionalen Sehnenlänge Cm hinter die Vorderkante reichen (-0,25*Cm <= a <= 0,55*Cm). Der Endpunkt E befindet sich in einem meridionalen Abstand e von der am Schaufelende betrachteten Schaufelvorderkante. Der Abstand e ist größer als der Abstand a und kann maximal 60 % der meridionalen Sehnenlänge Cm hinter die Vorderkante reichen (a < e <= 0,6*Cm).

Die Schlitze besitzen die Weite b, die zwischen 0 und 3 % der meridionalen Sehnenlänge Cm variieren kann. Für die Distanz d, um die die Schlitze voneinander getrennt sind, gilt: 0 < d < e-a-(N*b). Der Verlauf eines Schlitzes kann in Umfangsrichtung u um einen gewissen Betrag unterbrochen sein. Dies gilt sowohl für rein umfangsgerichtete als auch schräg (d.h. mit einer Meridianrichtungskomponente) verlaufende Schlitze. Die Umfangslänge V einzelner Unterbrechungen und die Umfangslänge U einzelner verbleibender Schlitzabschnitte können entlang des Schlitzverlaufes unterschiedlich sein, die Summen der verbleibenden Schlitzlängen und der Unterbrechungslängen müssen jedoch in einem Verhältnis von kleiner als 50 stehen (Summe U / Summe V < 50). Die Schlitze weisen eckige, angefaste oder gerundete Oberflächenkanten auf. Sie besitzen an ihren Enden eine eckige Form oder einen runden (langlochähnlichen) Abschluss. Die Schlitze führen senkrecht oder schräg zur Ringkanaloberfäche durch das Wandmaterial in eine Abfuhrkammer AK und nehmen dabei einen gradlinigen oder gekrümmten Verlauf. Fig. 18 zeigt den Fall von N = 3 unterbrochenen Schlitzen bei reiner Umfangsausrichtung.

In der erfindungsgemäßen Ausführung, siehe Fig. 19, ändert sich die Lage der Schlitze in Meridianströmungsrichtung periodisch entlang des Umfanges. Der Abstand F zwischen zwei benachbarten Positionen, an denen der Schlitz (einschließlich vorhandener Unterbrechungsabschnitte gemäß obiger Spezifikation) die gleiche Meridiankoordinate aufweist, ist dabei durch die am Schaufelende gemessene Schaufelteilung S und die mit der Kreiszahl PI und dem Endpunktradius RE berechnete Umfangslänge festgelegt (0,2*S < F <= 2*PI*RE). Dies beinhaltet insbesondere eine Schlitzkonfiguration, bei der der Verlauf (Umfangs- und Meridiankoordinate) einzelner Schlitze einschließlich ihrer Unterbrechungsabschnitte durch einen schrägen Kegelschnitt durch die Gehäuse- bzw. Nabenkontur gegeben ist.

In einer anderen besonderen Ausführung, siehe Fig. 20, ist der Schlitzverlauf periodisch unterbrochen und die Schlitzabschnitte sind gestaffelt angeordnet. In der durch die Meridian- und die Umfangsrichtung gebildeten Ebene sind die Schlitzabschnitte um den Winkel beta, der zwischen 30° und 90° betragen kann, gegen die Meridianströmungsrichtung geneigt (30° < beta < 90°). Dabei muss der Schlitzabschnitt nicht geradlinig verlaufen, sondern kann einfach oder mehrfach gekrümmt sein. Die Teilung K zwischen zwei Schlitzabschnitten ist durch die am Schaufelende gemessene Schaufelteilung S und die mit der Kreiszahl PI und dem Endpunktradius RE berechnete Umfangslänge festgelegt (0,2*S < K <= 2*PI*RE). In der Meridianebene (x,r) betrachtet kann der Schlitz um den Winkel alpha gegen die Meridianströmungsrichtung m geneigt sein. Bei besonderen Anforderungen kann eine ausgeprägte Schlitztordierung vorliegen, so dass der Bereich von alpha bereits entlang eines Schlitzabschnittes teilweise oder voll ausgeschöpft wird.

Alternativ kann an die Stelle mindestens eines Schlitzabschnitts der Gesamtkonfiguration eine Lochreihe treten, siehe Fig. 21. Der Lochdurchmesser unterliegt den selben Einschränkungen wie die Schlitzbreite b.

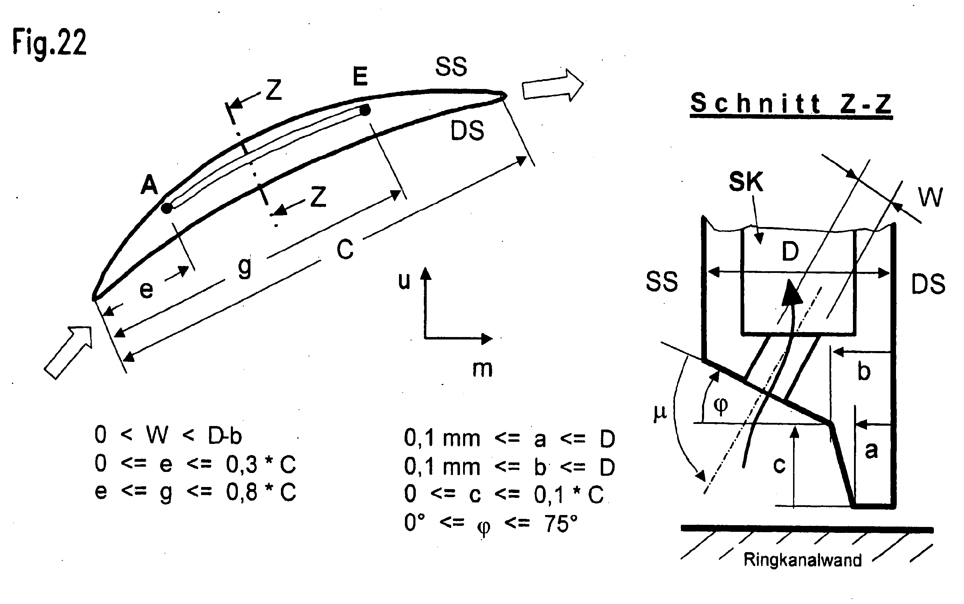

Die Fig. 22 bis 24 zeigen Ausführungsbeispiele der Fluidentnahmevorrichtung an Schaufelspitzen- und Ringkanaloberflächen (SRO) des Typs C, bei welchen ein entlang der Schaufelspitze angebrachter Schlitz bzw. funktional ähnliche Ersatzelemente vorgesehen sind. Schlitze oder Ersatzelemente können unterschiedlichen Schaufelkammern zugeordnet sein.

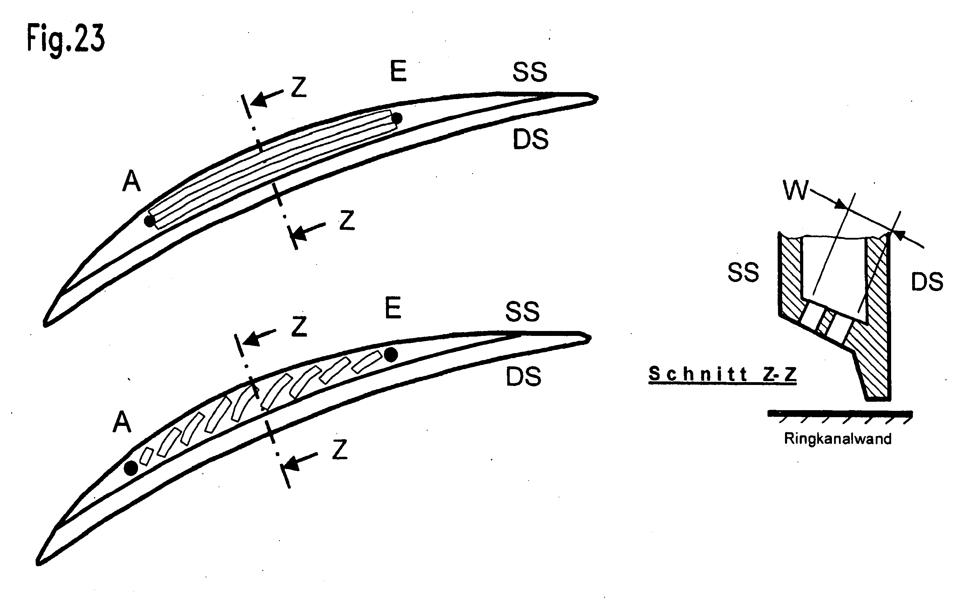

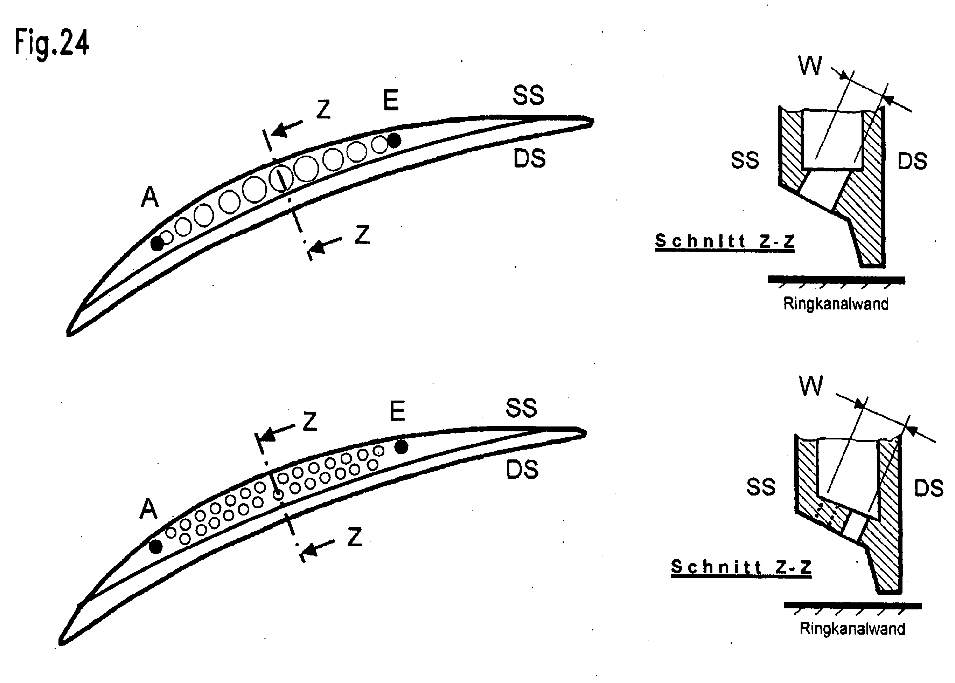

Dabei zeigt die Fig. 22 eine Fluidentnahmevorrichtung an einer Schaufelspitzen- und Ringkanaloberfläche (SRO) des Typs C mit mindestens einem Schlitz oder Ersatzelementen. Weitere Varianten hierzu sind in den Fig. 23 und 24 abgebildet.

Betrachtet wird die Spitze einer Schaufel in dem aus Meridianströmungsrichtung und Umfangsrichtung gebildeten Koordinatensystem (m,u) siehe Fig. 22. Die Schaufelspitze ist entweder konventionell (etwa rechtwinklig) oder mit einem Absatz ausgeführt, dessen spezifische Formgebung durch die Größen a, b, c und phi gegeben ist. Die stirnseitige Absatzbreite a hat einen Betrag von minimal einem Zehntel Millimeter und wird maximal so groß wie die örtlich vorliegende Profildicke D (0,1 mm <= a <= D). Die Absatzfußbreite b hat einen Betrag von minimal einem Zehntel Millimeter und wird maximal so groß wie die örtlich vorliegende Profildicke D (0,1 mm <= b <= D). Die Absatztiefe c beträgt bis zu 10 % der Profilsehnenlänge (0 <= c <= 0,1*C). Der Absatzneigungswinkel, der gegen die Ringkanalwand gemessen wird, nimmt Beträge zwischen 0 und 75 Grad an (0° <= phi <= 75°). Die Größen a, b, c und phi können sich in den spezifizierten Grenzen mit der jeweils betrachteten Profiltiefe ändern.

Auf der Stirnseite der Schaufelspitze befinden sich N nebeneinander verlaufende Schlitze (N >= 1), die sich entlang des Profils erstrecken. Der Anfangspunkt A der Schlitzanordnung liegt zwischen der Vorderkante VK und einer Profiltiefe von 30 % der Sehnenlänge C.

Der Endpunkt E liegt zwischen dem Anfangspunkt A und einer Profiltiefe von 80 % der Profilsehnenlänge C. Die Weite W der Schlitzanordnung ist veränderlich und nimmt maximal die je nach Profiltiefe aktuelle, um die Absatzfußbreite b reduzierte Profildicke D an (0 < W < D-b). Der Schlitz weist eckige, angefaste oder gerundete Oberflächenkanten auf. Sie besitzen an Anfangs- und Endpunkt eine eckige Form oder einen runden (langlochähnlichen) Abschluss. Die Schlitze führen senkrecht oder schräg zur Schaufelspitzenoberfläche durch das Wandmaterial in eine Schaufelkammer SK.

In einer abgewandelten Form tritt - bei gleichen Regeln hinsichtlich der Positionierung und des Verlaufes an der Schaufelspitze sowie der Beschaffenheit der Oberflächenkanten und Orientierung in der Schaufelspitzenwand - an die Stelle mindestens eines Schlitzes eine Formation aus mehreren geraden oder gekrümmten Schlitzen mit einer maximalen Weite W der Schlitzkonfiguration von 0 < W < D-b.

In einer abgewandelten Form tritt - bei gleichen Regeln hinsichtlich der Positionierung und des Verlaufes entlang der Schaufelspitze sowie der Beschaffenheit der Oberflächenkanten und Orientierung in der Schaufelspitzenwand - an die Stelle mindestens eines Schlitzes eine Formation aus mehreren Löchern.

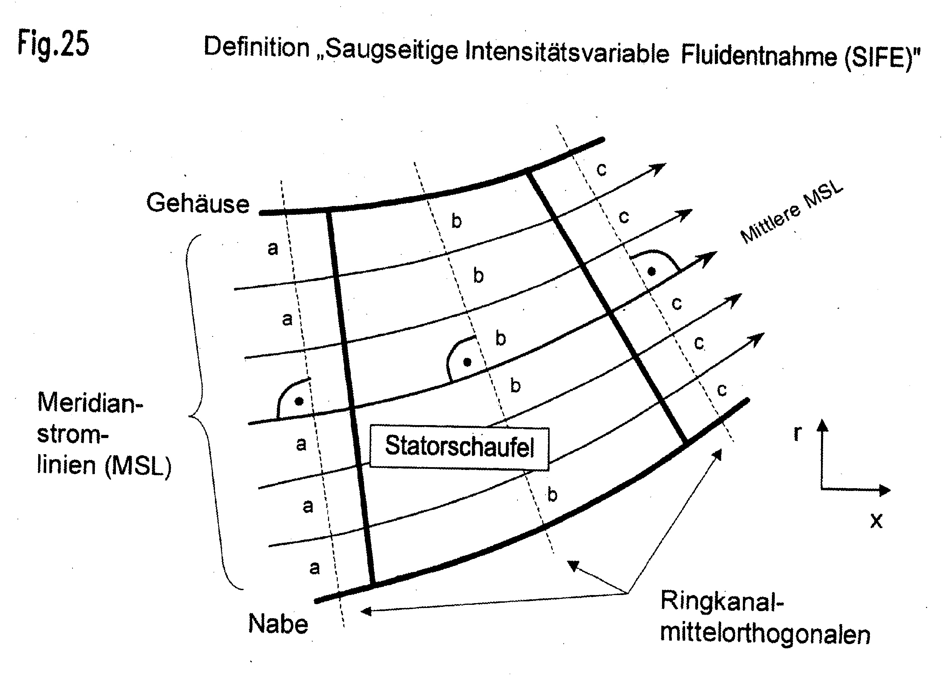

Die Fig. 25 bis 27 zeigen Ausführungsbeispiele der Vorrichtung zur saugseitigen, intensitätsvariablen Fluidentnahme (SIFE) an einer Statorreihe. Hierbei ist in aerodynamisch kritischen Zonen auf der Schaufelsaugseite eine Formation aus Schlitzen bzw. funktional ähnlichen Ersatzelementen vorgesehen, die eine variable Intensität der Fluidentnahme in meridianstromlinienorthogonaler Richtung ermöglicht.

Die Fluidentnahme geschieht durch eine Anzahl von Öffnungen, die unterschiedlichen Schaufelinnenkammern zugeordnet sein können.

Wie in Fig. 25 dargestellt ist, gilt im Einzelnen das Folgende:

Eine Statorschaufelreihe der Strömungsarbeitsmaschine wird in dem aus Axial- und Radialrichtung gebildeten Koordiantensystem (x, r) betrachtet. Die Festlegung der Vorrichtung zur SIFE orientiert sich an einer Anzahl von Meridianstromlinien, deren Stützstellen aus einer zwischen Nabe und Gehäuse äquidistanten Teilung der Ringkanalmittelorthogonalen hervorgehen. Dies ist in Fig. 25 beispielhaft für je eine Ringkanalmittelorthogonale vor (siehe gleiche Strecken a), innerhalb (siehe gleiche Strecken b) und hinter der Schaufelreihe (siehe gleiche Strecken c) gezeigt.

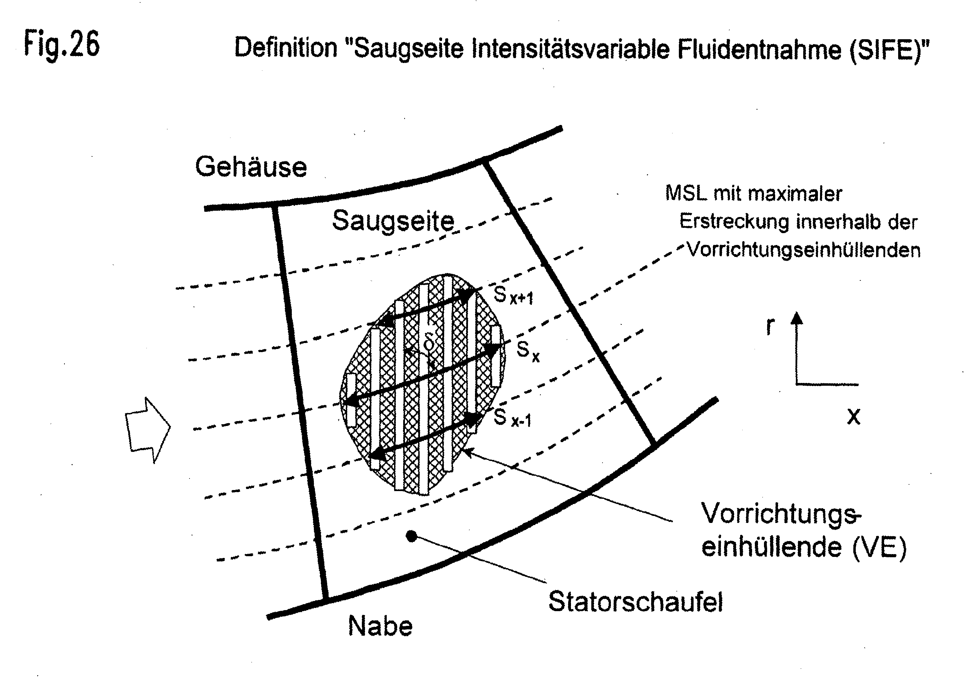

Die Fig. 26 zeigt ein Ausführungsbeispiel der Vorrichtung zur SIFE. Die Vorrichtung besteht aus einem Verbund von mindestens zwei Öffnungen (N >= 2), die innerhalb eines Teilbereiches der Saugseite mindestens einer Schaufel einer Statorreihe vorgesehen sind. Die von der Vorrichtung eingenommene Zone der Saugseite wird durch die Einhüllende um alle zum Verbund gehörenden Öffnungen beschrieben (Vorrichtungseinhüllende VE). Die Vorrichtung ist so beschaffen, dass entlang einer bestimmten Meridianstromlinie die maximale Meridianerstreckung s(x) vorliegt. Der Übergang zu benachbarten Meridianstromlinien ergibt eine in Richtung des Gehäuses und in Richtung der Nabe stufenweise oder kontinuierlich abnehmende Meridianerstreckung. Von Stromlinie zu Stromlinie gilt folglich:

$$S(x)>=S(x+1)>=...>=S(x+n) \quad bzw. \quad S(x)>=S(x-1)>=...>=S(x-n).$$

In der gewählten Darstellung besteht die Vorrichtung aus einer Anzahl von geraden, parallelen Schlitzen. Jedoch kann jeder Schlitz einfach oder mehrfach gekrümmt verlaufen, konstante oder in seiner Längsrichtung veränderliche Breite aufweisen, und am Anfangs- und Endpunkt eine eckige Form oder einen runden (langlochähnlichen) Abschluss besitzen. Zwischen Schlitz und Meridianstromlinie kann ein beliebiger Neigungswinkel delta vorliegen. Die Schlitze führen senkrecht oder schräg zur Saugseitenoberfläche durch das Wandmaterial in eine Schaufelinnenkammer SK.

In einer abgewandelten Form tritt - bei gleichen Regeln hinsichtlich der Anordnung und des Verlaufes an der Saugseitenoberfläche sowie der Beschaffenheit der Oberflächenkanten und Orientierung in der Saugseitenwand - an die Stelle mindestens eines Schlitzes eine ein- oder mehrreihige Formation von Löchern. In einer anderen abgewandelten Form ist - bei gleichen Regeln hinsichtlich der Anordnung und des Verlaufes an der Saugseitenoberfläche - mindestens ein Schlitz als Staueinlauf ausgeformt, **dadurch gekennzeichnet, dass** Fluid unter höchstens 30° zur Saugseitenoberfläche abgeführt wird (siehe Darstellung in Fig. 17, rechts).

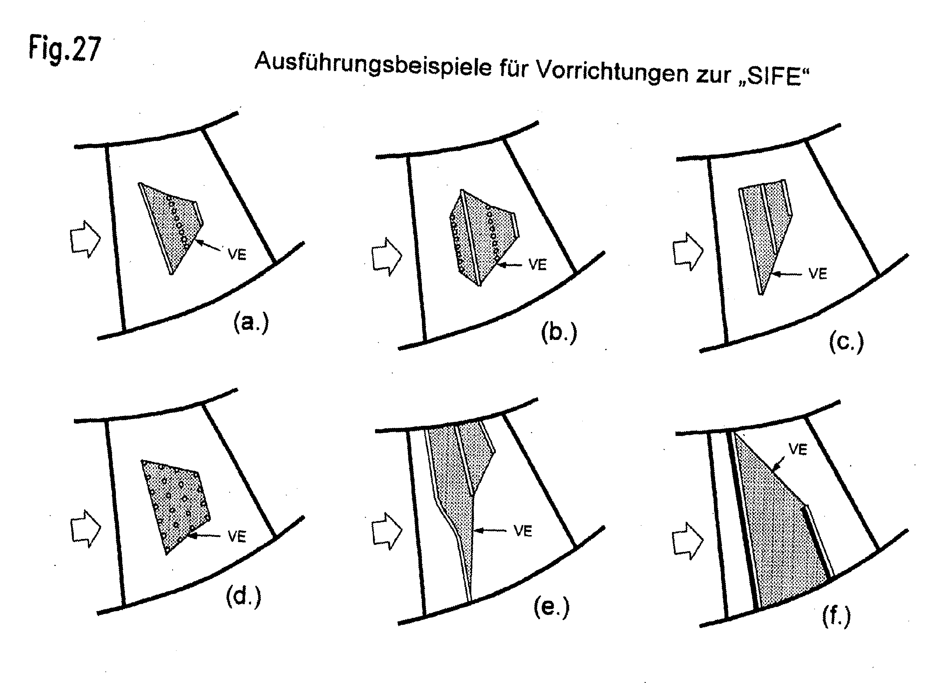

Die Fig. 27 zeigt unterschiedliche Ausführungsvarianten einer Vorrichtung zur SIFE. Im Einzelnen zeigen dabei die Ausführungsbeispiele Folgendes:

Die Fig. 27a zeigt eine Statorbaugruppe, die zur Realisierung der meridianstromlinienorthogonalen Variation der Fluidentnahmeintensität auf der Saugseite eine Formation aus 2 Schlitzen und einer Lochreihe aufweist. Die Vorrichtung bedeckt nur einen Teil der Saugseite und ist in diesem Anwendungsbeispiel in deren Zentralbereich angeordnet. Der Verbund aus Schlitzen und Löchern ist durch die Vorrichtungseinhüllende VE umgeben und markiert. Es ist ersichtlich, dass die Meridianerstreckung der Vorrichtung hier sowohl in Richtung des Gehäuses als auch in Richtung der Nabe kontinuierlich abnimmt.

Die Fig. 27b zeigt eine gegenüber Fig. 27a abgewandelte Statorbaugruppe, bei der die Schlitz- und Lochelemente eine andere Reihenfolge einnehmen und die Anzahl der Elemente erhöht ist.

Die Fig. 27c zeigt eine Statorbaugruppe, die auf der Saugseite eine Formation aus 3 Schlitzen aufweist. Die Vorrichtung ist in diesem Anwendungsbeispiel primär dem Gehäuse gewandt. Der Verbund der Öffnungen ist durch die Vorrichtungseinhüllende VE umgeben und markiert. Es ist ersichtlich, dass die Meridianerstreckung der Vorrichtung hier in Richtung des Gehäuses stufenhaft auf null sinkt und in Richtung der Nabe kontinuierlich abnimmt.

Die Fig. 27d zeigt eine Statorbaugruppe, die auf der Saugseite eine Formation aus Löchern aufweist. Die Vorrichtung ist in diesem Anwendungsbeispiel im Zentralbereich der Saugseite angeordnet. Die Vorrichtungseinhüllende lässt ersehen, dass die Meridianerstreckung der Vorrichtung in diesem Anwendungsbeispiel sowohl in Richtung des Gehäuses als auch in Richtung der Nabe kontinuierlich abnimmt.

Die Fig. 27e zeigt eine Statorbaugruppe, die auf der Saugseite eine Formation aus 3 Schlitzen aufweist. Die Vorrichtung liegt in diesem Anwendungsbeispiel am Gehäuse. Die Vorrichtungseinhüllende lässt ersehen, dass die Meridianerstreckung der Vorrichtung hier in Richtung der Nabe kontinuierlich abnimmt.

Die Fig. 27f zeigt eine Statorbaugruppe, die auf der Saugseite eine Formation aus 2 Staueinläufen aufweist. Die Vorrichtung liegt in diesem Anwendungsbeispiel an der Nabe. Die Vorrichtungseinhüllende lässt ersehen, dass die Meridianerstreckung der Vorrichtung hier in Richtung des Gehäuses kontinuierlich abnimmt.

Schließlich lässt sich ein besonders hohes Maß an Strömungsbeeinflussung erreichen, wenn eine oder mehrere Lösungen für eine Fluidentnahme mit Maßnahmen zur Fluidzufuhr im Bereich derselben Schaufelreihe verbunden werden.

In diesem Fall existiert an mindestens einer Schaufelreihe der Strömungsarbeitsmaschine sowohl ein Kammersystem zur Fluidentnahme und anschließender Wegführung von der Schaufelseite in einen Bereich außerhalb des Ringkanals als auch ein nicht weiter festzulegendes Kammersystem zur Heranführung von Fluid an die Schaufelseite und anschließender Zufuhr in den Ringkanal an Oberflächen im Bereich vor oder innerhalb dieser Schaufelreihe.

Dabei vereinen sich Fluidentnahme und Fluidzufuhr an ein und derselben Schaufel eines Rotors oder Stators, oder sind an unterschiedlichen Schaufeln derselben Rotor- oder Schaufelreihe vorgesehen.

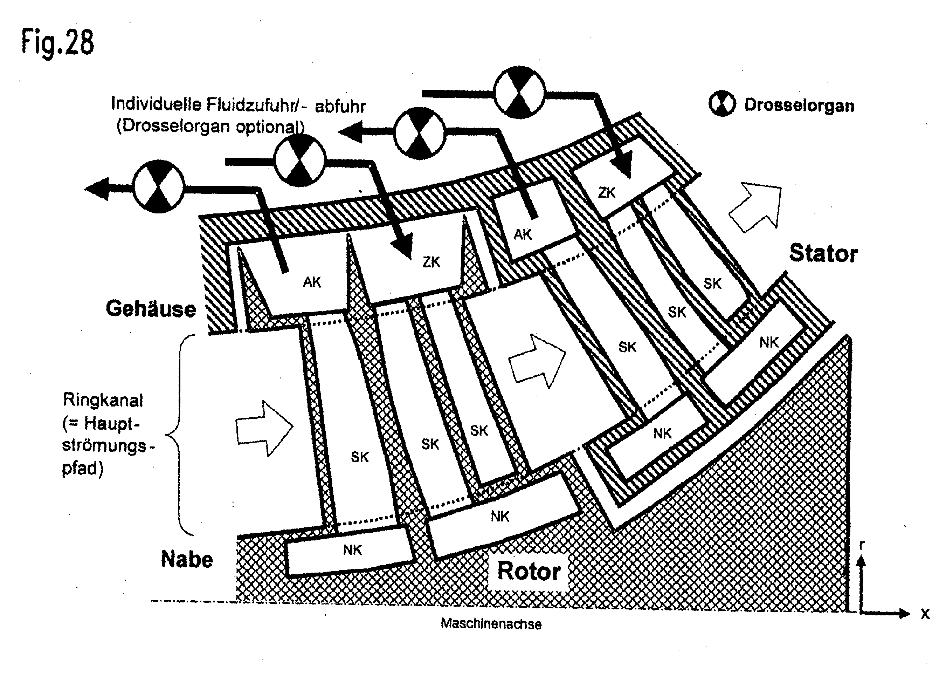

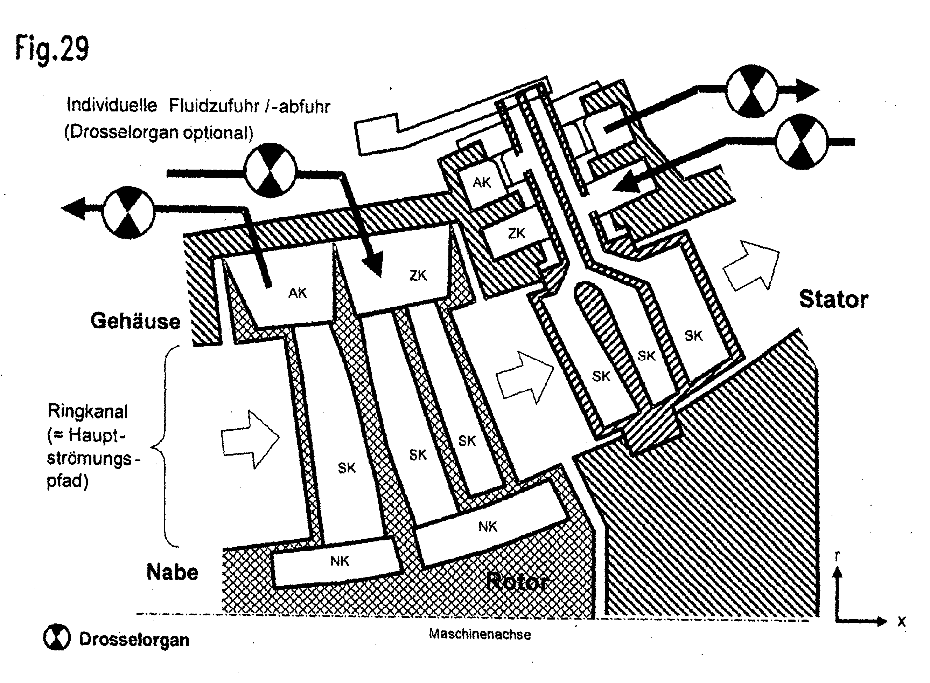

Die Fig. 28 und 29 zeigen beispielhaft einige mögliche Varianten von Schaufelseiten mit der entsprechenden Bifunktionalität an derselben Schaufel.

Bei der Strömungsarbeitsmaschine wird somit ein bislang unerreichtes Maß an Grenzschichtbeeinflussung erzielt. Dies ist bei unterschiedlichsten Arten von Strömungsarbeitsmaschinen, wie etwa Bläsern, Verdichtern, Pumpen und Ventilatoren möglich. Je nach Ausführungsvariante sind eine aerodynamische Belastung und eine Strömungsumlenkung möglich, die bis zu 50% über den nach dem Stand der Technik erreichten Werten liegen. Für festgeschriebene Leistungswerte einer Strömungsarbeitsmaschine lässt sich unter Beibehaltung oder Verbesserung des Wirkungsgrades von bis zu 1% die Anzahl der verbauten Teile um etwa 30% gegenüber einer konventionellen Bauweise senken. Dabei sinken die Kosten um 10% bis 15%. Bei Einsatz eines neuen Schaufelkonzeptes im Verdichter eines Flugtriebwerks mit rund 25.000 Pfund Schub ergibt sich eine Reduzierung des spezifischen Kraftstoffverbrauchs von bis zu 0,5% und eine Gewichtsersparnis von rund 5%.

**Bezugszeichenliste**

| | |
|---|---|
| 1 | Gehäuse |
| 2 | Schaufel |
| 3 | Schlitz |
| 4 | Schlitz |
| 5 | Stator |
| 6 | Rotor |
| 7 | Stator , |
| 8 | Rotorschaufel |
| 9 | Statorschaufel |
| 10 | Ringkanal |
| 11 | Rotortrommel (Nabe) |
| 12 | Rotortrommel (Nabe) |
| 13 | Maschinenachse |

**Patentansprüche**

1. Strömungsarbeitsmaschine mit zumindest einem Rotor (6), der mehrere an einer rotierenden Welle befestigte Rotorschaufeln (8) umfasst sowie mit einem Gehäuse (1), welches unter Durchströmung vom Rotor (6) von einem Fluid durchströmt wird, wobei Mittel zur Entnahme von Fluid an mindestens einer Schaufel (8, 9) einer Schaufelreihe des Rotors (6) oder eines Stators an aerodynamisch kritischen Orten auf Schaufelspitzen- und Ringkanaloberflächen (SRO) vorgesehen sind,
wobei diese Schaufelspitzen- und Ringkanaloberflächen (SRO) in Form von Oberflächen an Naben- oder Gehäusekonturen des Ringkanals im Bereich freier Schaufelenden zwischen der Hinterkantenebene HK und einer Ebene, die sich 25 % der meridionalen Schaufelsehnenlänge Cm vor der Vorderkantenebene VK befindet, ausgebildet sind,
wobei die Mittel zur Fluidentnahme sich bis maximal 60% der meridionalen Schaufelsehnenlänge stromab der Vorderkantenebene erstrecken,
wobei die Mittel zur Fluidentnahme eine umfangsgerichtete Schlitzanordnung umfassen,
**dadurch gekennzeichnet, dass**
die Mittel zur Fluidentnahme eine Schwingform-Schlitzanordnung aufweisen, wobei die Schwingform durch Änderung der Lage der Schlitze in Meridianströmungsrichtung periodisch entlang des Umfanges entsteht.

2. Strömungsarbeitsmaschine nach Anspruch 1, **dadurch gekennzeichnet, dass** an mindestens einer Schaufel (9) einer Schaufelreihe eines Stators (7) mindestens eine Vorrichtung zur saugseitigen, intensitätsvariablen Fluidentnahme (SI-FE) vorgesehen ist, wobei Mittel zur Fluidentnahme auf der Schaufelsaugseite und in Meridianströmungsrichtung betrachtet in einem Teilbereich der Schaufelprofiltiefe angeordnet sind, wobei die meridionale Erstreckung des besagten Teilbereiches in meridianstromlinienorthogonaler Richtung zu wenigstens einer der Ringkanalwände (Nabe 11 oder Gehäuse 1) hin abnimmt.

3. Strömungsarbeitsmaschine nach einem der Ansprüche 1 oder 2, **dadurch gekennzeichnet, dass** das Fluid über Strömungswege innerhalb der Schaufel und/oder ihrer umgebenden Bauteile abgeführt wird.

4. Strömungsarbeitsmaschine nach Anspruch 3, **dadurch gekennzeichnet, dass** das Fluid mittels mindestens eines im Strömungsweg angeordneten Drosselorgans vom Ringkanal abgeleitet wird.

5. Strömungsarbeitsmaschine nach einem der Ansprüche 1 bis 4, **dadurch gekennzeichnet, dass** das Fluid von der Strömungsarbeitsmaschine gänzlich abgeführt wird.

6. Strömungsarbeitsmaschine nach einem der Ansprüche 1 bis 4, **dadurch gekennzeichnet, dass** das Fluid wieder der Strömungsarbeitsmaschine rückgeführt wird.

**Claims**

1. Fluid-flow machine with at least one rotor (6), which includes several rotor blades (8) attached to a rotating shaft and with a casing (1) which is passed by a fluid flowing through the rotor (6), with means for the removal of fluid on at least one blade (8, 9) of a blade row of the rotor (6) or a stator being provided on aerodynamically critical locations on blade-tip and annulus surfaces (SRO),

   - with these blade-tip and annulus surfaces (SRO) being provided in the form of surfaces on the hub and casing contours of the annulus in the area of free blade ends between the trailing-edge plane HK and a plane located at 25% of the meridional blade chord length Cm upstream of the leading-edge plane VK,
   - with the means for fluid removal extending up to max. 60% of the meridional blade chord length downstream of the leading-edge plane,
   - with the means for fluid removal including a circumferential slot arrangement,

   **characterized in that**
   the means for fluid removal feature a curvilinear slot arrangement, with the curvilinear shape being generated periodically along the circumference by a positional change of the slots in the meridional flow direction.

2. Fluid-flow machine in accordance with Claim 1, **characterized in that** on at least one blade (9) of a blade row of a stator (7) at least one device for suction-side, intensity-variable fluid removal (SIFE) is provided, with means for fluid removal on the blade suction side, as viewed in the meridional flow direction, being arranged in a partial area of the blade profile depth, with the meridional extension of said partial area decreasing in a direction orthogonal to the meridional flow line towards at least one of the annulus walls (hub 11 or casing 1).

3. Fluid-flow machine in accordance with one of the Claims 1 or 2, **characterized in that** the fluid is discharged via flow paths within the blade and/or components surrounding the blade.

4. Fluid-flow machine in accordance with Claim 3, **characterized in that** the fluid is removed from the annulus via at least one throttling element arranged in the flow path.

5. Fluid-flow machine in accordance with one of the Claims 1 to 4, **characterized in that** the fluid is completely discharged from the fluid-flow machine.

6. Fluid-flow machine in accordance with one of the Claims 1 to 4, **characterized in that** the fluid is returned to the fluid-flow machine.

**Revendications**

1. Turbomachine avec au moins un rotor (6) qui comprend plusieurs aubes de rotor (8) fixées sur un arbre rotatif, ainsi qu'un carter (1) qui est traversé par un fluide lors de l'écoulement dans le rotor (6), sachant que des moyens pour prélever du fluide à au moins une aube (8, 9) d'une rangée d'aubes du rotor (6) ou d'un stator sont prévus à des endroits aérodynamiquement critiques sur des surfaces des bouts d'aubes et du canal annulaire (SRO),

- sachant que ces surfaces des bouts d'aubes et du canal annulaire (SRO) sont réalisées sous forme de surfaces sur des contours de moyeu et de carter du canal annulaire dans la zone de bouts d'aubes libres entre le plan des bords de fuite HK et un plan se trouvant à 25 % de la longueur de corde méridienne d'aube Cm en amont du plan des bords d'attaque VK,

- sachant que les moyens de prélèvement de fluide s'étendent en aval du plan des bords d'attaque jusqu'à 60 % au maximum de la longueur de corde méridienne d'aube,

- sachant que les moyens de prélèvement de fluide comprennent un arrangement de fentes orienté dans le sens circonférentiel,

**caractérisée en ce que**
les moyens de prélèvement de fluide présentent un arrangement de fentes de forme curviligne, sachant que la forme curviligne est générée périodiquement le long de la circonférence par changement de la position des fentes dans le sens d'écoulement méridien.

2. Turbomachine selon la revendication n° 1, **caractérisée en ce que** sur au moins une aube (9) d'une rangée d'aubes d'un stator (7) est prévu au moins un dispositif pour le prélèvement de fluide du côté aspiration et variable en intensité (SIFE), sachant que des moyens de prélèvement de fluide du côté aspiration des aubes, vus dans le sens de l'écoulement méridien, sont disposés dans une zone partielle de la profondeur du profil d'aube, et que l'extension méridienne de ladite zone partielle dans le sens orthogonal à la ligne d'écoulement méridienne diminue en direction d'au moins l'une des parois du canal annulaire (moyeu 11 ou carter 1).

3. Turbomachine selon une des revendications n° 1 ou n° 2, **caractérisée en ce que** le fluide est évacué par des voies d'écoulement à l'intérieur de l'aube et/ou de ses composants avoisinants.

4. Turbomachine selon la revendication n° 3, **caractérisée en ce que** le fluide est évacué du canal annulaire par au moins un élément d'étranglement disposé dans la voie d'écoulement.

5. Turbomachine selon une des revendications n° 1 à n° 4, **caractérisée en ce que** le fluide est entièrement évacué de la turbomachine.

6. Turbomachine selon une des revendications n° 1 à n° 4, **caractérisée en ce que** le fluide est retourné à la turbomachine.

Fig.2

Fig.1

# Gezielte Fluidentnahme an Schaufelspitzen- und Ringkanaloberflächen (SRO), Funktionsmuster 1 bis 4

## Fig.3

EP 1 536 146 B1

# Gezielte Fluidentnahme an Schaufelspitzen- und Ringkanaloberflächen (SRO), Funktionsmuster 5 bis 8

**Fig.4**

EP 1 536 146 B1

A.

Vor-leit-rad | Rotor n | Stator n | Rotor n+1 | Stator n+1

10

11

13

r x

B.

Rotor n | Rotor n+1 | Stator n+1

10

11

r x

12

13

C.

Rotor (n) | Stator (n) aussen

Stator (n) innen | Rotor (n+1) | Stator (n+1)

10

11

r x

13

1

1

D.

Rotor (n) | Rotor (n+1) | Stator (n+1)

S (n) | R (n+1) | S (n+1)

10

r x

12

13

Fig.5

EP 1 536 146 B1

Fig.6

EP 1 536 146 B1

Schaufelspitzen- und Ringkanal- Oberflächen SRO (Typen A, B, C)

(a.) Rotor mit
Außendeckband

(b.) Rotor mit Laufspalt und
freien Blattspitzen

(c.) Stator mit
Innendeckband

SRO, Typ A

SRO, Typ A

SRO, Typ B

SRO, Typ C

SRO, Typ A

SRO, Typ A

SRO, Typ A

(d.) Stator mit Laufspalt
(innen) und
freien Schaufelspitzen

(e.) Stator mit Standspalt
(innen) und
freien Schaufelspitzen

(f.) Stator mit Standspalt
(außen) und
freien Schaufelspitzen

(g.) Stator mit zweifacher
Befestigung

SRO, Typ A

SRO, Typ C

SRO, Typ B

SRO, Typ A

SRO, Typ C

SRO, Typ B

SRO, Typ B

SRO, Typ C

SRO, Typ A

SRO, Typ A

SRO, Typ A

——— Ruhendes Bauteil       ·········· Rotierendes Bauteil

Fig.7

EP 1 536 146 B1

Fig.8

Fig.9

Fig.10

Individuelle Fluidabfuhr
(Drosselorgan optional)

⊗ Drosselorgan

AK

1

10

11

6

7

13

EP 1 536 146 B1

# Fig.11

⊗ Drosselorgan

Maschinenachse

Individuelle Fluidabfuhr
(Drosselorgan optional)

EP 1 536 146 B1

# Fig.12

⊗ Drosselorgan

Maschinenachse

Individuelle Fluidabfuhr
(Drosselorgan optional)

EP 1 536 146 B1

# Fig.13

ⓧ Drosselorgan

GK

GK

SK

SK

SK

7

AK

AK

1

6

10

AK

AK

11

Maschinenachse

13

Individuelle Fluidabfuhr
(Drosselorgan optional)

r

x

EP 1 536 146 B1

Fig.14

$$R = \frac{C}{2 \sin ((\beta_1 - \beta_2) / 2)}$$

EP 1 536 146 B1

Fig. 15

Fig.16

Staueinlaufformen:

0° – 30°
vorstehend

0° – 30°
fluchtend

Lochformation

Schlitzformation

Staueinlauf

W

W

Fig.17

29

Fig.18

mindestens eine AK

Wand

A

E

G

G

$R_E$

m

Freies
Schaufelende

$C_m$

r

x

$-0,25 * C_m < a < 0,55 * C_m$
$a < e <= 0,6 * C_m$

$0 < b < 0,03 * C_m$
$0 < d < e-a-(N*b)$

Ansicht G - G

u

$C_m$

m

a

e

S

F

$0,2*S < F <= 2*\pi*R_E$

Fig.19

EP 1 536 146 B1

# Fig.20

mindestens eine ZK

Wand

E

A

α

a

b

e

$C_m$

$R_E$

m

Freies Schaufelende

G

G

r

x

$-0,25 * C_m < a < 0,55 * C_m$

$a < e <= 0,6 * C_m$

$0 < b < 0,03 * C_m$

$30° < \beta < 90°$

$0,2* < K <= 2*\pi*R_E$

## Ansicht G - G

e

$C_m$

a

β

K

S

u

m

EP 1 536 146 B1

Ansicht G - G

Fig.21

# Fig.22

$0 < W < D\text{-}b$
$0 <= e <= 0,3 * C$
$e <= g <= 0,8 * C$

$0,1\ mm <= a <= D$
$0,1\ mm <= b <= D$
$0 <= c <= 0,1 * C$
$0° <= \varphi <= 75°$

## Schnitt Z-Z

Ringkanalwand

EP 1 536 146 B1

# Fig.23

SS

DS

Schnitt Z-Z

Ringkanalwand

EP 1 536 146 B1

Fig.24

**Fig.25**  Definition „Saugseitige Intensitätsvariable Fluidentnahme (SIFE)"

EP 1 536 146 B1

# Fig.26 Definition "Saugseite Intensitätsvariable Fluidentnahme (SIFE)"

Gehäuse

Saugseite

MSL mit maximaler
Erstreckung innerhalb der
Vorrichtungseinhüllenden

$S_{x+1}$

$S_x$

$S_{x-1}$

$r$

$x$

Vorrichtungseinhüllende (VE)

Statorschaufel

Nabe

EP 1 536 146 B1

Fig.27

Ausführungsbeispiele für Vorrichtungen zur „SIFE"

(a.)

(b.)

(c.)

(d.)

(e.)

(f.)

EP 1 536 146 B1

# Fig.28

Individuelle Fluidzufuhr/- abfuhr
(Drosselorgan optional)

⊗ Drosselorgan

AK

ZK

ZK

AK

SK

SK

SK

SK

Stator

Gehäuse

Ringkanal
(= Hauptströmungspfad)

SK

SK

SK

NK

NK

NK

Nabe

NK

NK

Rotor

r

x

Maschinenachse

EP 1 536 146 B1

# Fig.29

Individuelle Fluidzufuhr /-abfuhr
(Drosselorgan optional)

Gehäuse

Ringkanal
(≈ Hauptströmungspfad)

Nabe

Rotor

Stator

AK

ZK

ZK

AK

SK

SK

SK

SK

SK

SK

SK

SK

NK

NK

NK

Maschinenachse

r

x

⊗ Drosselorgan

EP 1 536 146 B1

**EP 1 536 146 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2870957 A
- US 2720356 A
- US 3694102 A
- US 3993414 A
- US 5904470 A
- US 5480284 A
- US 3735593 A
- WO 9830803 A
- EP 1382855 A
- EP 0497574 A
- GB 1085227 A
- US 3414188 A
- US 3846038 A
- DE 722424 C
- US 5762470 A
- EP 1013937 A2